(19) **Europäisches Patentamt / European Patent Office / Office européen des brevets**

(11) **EP 3 179 644 B1**

(12) # EUROPEAN PATENT SPECIFICATION

(45) Date of publication and mention of the grant of the patent:
**20.11.2019 Bulletin 2019/47**

(21) Application number: **15829913.1**

(22) Date of filing: **06.08.2015**

(51) Int Cl.:
*H04B 7/26* (2006.01)  *H04L 1/00* (2006.01)
*H04L 5/00* (2006.01)  *H04W 52/14* (2009.01)
*H04W 52/34* (2009.01)  *H04W 52/38* (2009.01)
*H04W 16/14* (2009.01)  *H04B 7/06* (2006.01)
*H04L 1/18* (2006.01)  *H04L 5/14* (2006.01)
*H04L 27/26* (2006.01)  *H04W 72/04* (2009.01)
*H04W 52/28* (2009.01)  *H04W 52/36* (2009.01)
*H04W 74/08* (2009.01)

(86) International application number:
**PCT/KR2015/008249**

(87) International publication number:
**WO 2016/021958 (11.02.2016 Gazette 2016/06)**

(54) **METHOD FOR TRANSMITTING UPLINK SIGNAL AND USER EQUIPMENT, AND METHOD FOR RECEIVING UPLINK SIGNAL AND BASE STATION**

VERFAHREN ZUR ÜBERTRAGUNG EINES UPLINK-SIGNALS UND BENUTZERGERÄT UND VERFAHREN ZUM EMPFANGEN EINES UPLINK-SIGNALS UND BASISSTATION

PROCÉDÉ D'ÉMISSION DE SIGNAL EN LIAISON MONTANTE ET ÉQUIPEMENT D'UTILISATEUR, ET PROCÉDÉ DE RÉCEPTION DE SIGNAL EN LIAISON MONTANTE ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 06.08.2014 US 201462033663 P
05.09.2014 US 201462046186 P
05.11.2014 US 201462075266 P
07.11.2014 US 201462076501 P
19.11.2014 US 201462082054 P
13.02.2015 US 201562115660 P
13.03.2015 US 201562132523 P
08.04.2015 US 201562144352 P
10.06.2015 US 201562173923 P
23.06.2015 US 201562183197 P

(43) Date of publication of application:
**14.06.2017 Bulletin 2017/24**

(73) Proprietor: **LG Electronics Inc.**
**Seoul 07336 (KR)**

(72) Inventors:
• **YANG, Suckchel**
**Seoul 06772 (KR)**
• **AHN, Joonkui**
**Seoul 06772 (KR)**
• **LEE, Seungmin**
**Seoul 06772 (KR)**
• **KIM, Seonwook**
**Seoul 06772 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(56) References cited:
WO-A1-2014/088295  WO-A2-2013/005988
JP-A- 2013 102 398  US-A1- 2011 259 490
US-A1- 2012 250 631

**(Cont. next page)**

- ZTE: "Discussion on LTE in Unlicensed Spectrum", 3GPP DRAFT; RWS-140021 DISCUSSION ON LTE IN UNLICENSED SPECTRUM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Sophia Antipolis, France; 20140613 6 June 2014 (2014-06-06), XP050774767, Retrieved from the Internet: URL:http://www.3gpp.org/ftp/Meetings_3GPP_ SYNC/2014-06-13_LTE-U/Docs/ [retrieved on 2014-06-06]
- NTT DOCOMO: "Summary of email discussion [76b-08]", 3GPP DRAFT; R1-142263, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789380, Retrieved from the Internet: URL:http://www.3gpp.org/ftp/Meetings_3GPP_ SYNC/RAN1/RAN1/Docs/ [retrieved on 2014-05-18]
- SAMSUNG: "Multiple TA for TDD-FDD CA", 3GPP DRAFT; R1-140365, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735912, Retrieved from the Internet: URL:http://www.3gpp.org/ftp/Meetings_3GPP_ SYNC/RAN/RAN1/Docs/ [retrieved on 2014-02-09]
- ALCATEL -LUCENT SHANGHAI BELL ET AL.: 'UL Power Control and Power Scaling for Dual Connectivity' R1-140165, 3GPP TSG RAN WG1 MEETING #76 01 February 2014, PRAGUE, CZECH REPUBLIC, XP055398474

**Description**

**TECHNICAL FIELD**

The present invention relates to a wireless communication system and, more particularly, to a method for receiving or transmitting uplink signal and an apparatus therefor.

**BACKGROUND ART**

With appearance and spread of machine-to-machine (M2M) communication and a variety of devices such as smartphones and tablet PCs and technology demanding a large amount of data transmission, data throughput needed in a cellular network has rapidly increased. To satisfy such rapidly increasing data throughput, carrier aggregation technology, cognitive radio technology, etc. for efficiently employing more frequency bands and multiple input multiple output (MIMO) technology, multi-base station (BS) cooperation technology, etc. for raising data capacity transmitted on limited frequency resources have been developed.

A general wireless communication system performs data transmission/reception through one downlink (DL) band and through one uplink (UL) band corresponding to the DL band (in case of a frequency division duplex (FDD) mode), or divides a prescribed radio frame into a UL time unit and a DL time unit in the time domain and then performs data transmission/reception through the UL/DL time unit (in case of a time division duplex (TDD) mode). A base station (BS) and a user equipment (UE) transmit and receive data and/or control information scheduled on a prescribed time unit basis, e.g. on a subframe basis. The data is transmitted and received through a data region configured in a UL/DL subframe and the control information is transmitted and received through a control region configured in the UL/DL subframe. To this end, various physical channels carrying radio signals are formed in the UL/DL subframe. In contrast, carrier aggregation technology serves to use a wider UL/DL bandwidth by aggregating a plurality of UL/DL frequency blocks in order to use a broader frequency band so that more signals relative to signals when a single carrier is used can be simultaneously processed.

In addition, a communication environment has evolved into increasing density of nodes accessible by a user at the periphery of the nodes. A node refers to a fixed point capable of transmitting/receiving a radio signal to/from the UE through one or more antennas. A communication system including high-density nodes may provide a better communication service to the UE through cooperation between the nodes.

US 2012/250631 A1 refers to a communication method comprising: utilizing by an apparatus downlink control signaling to associate at least a first logical channel or radio bearer with a first component carrier in a licensed frequency band and to associate at least a second logical channel or radio bearer with a second component carrier in an unlicensed frequency band; and utilizing the associations to control by the apparatus which uplink data is sent on the first and on the second component carriers by multiplexing the uplink data on the at least first and the at least second logical channels or radio bearers.

3GPP RWS-140021 refers to discussion on LTE in unlicensed spectrum and teaches that LTE-U carrier of TDD mode should be considered with more priorities.

3GPP R1-142263 discloses that a priority rule, such as PUCCH > PUSCH with UCI > PUSCH, can be applied to uplink transmissions over two eNBs.

3GPP R1-140 describes Multiple TA for TDD-FDD CA.

**DETAILED DESCRIPTION OF THE INVENTION**

**Technical Problems**

Due to introduction of new radio communication technology, the number of user equipments (UEs) to which a BS should provide a service in a prescribed resource region increases and the amount of data and control information that the BS should transmit to the UEs increases. Since the amount of resources available to the BS for communication with the UE(s) is limited, a new method in which the BS efficiently receives/transmits uplink/downlink data and/or uplink/downlink control information using the limited radio resources is needed.

Further, a method capable of simultaneously transmitting more signals by aggregating carriers used by different systems is needed.

The technical objects that can be achieved through the present invention are not limited to what has been particularly described hereinabove and other technical objects not described herein will be more clearly understood by persons skilled in the art from the following detailed description.

**Technical Solutions**

The present invention provides a method according to independent claim 1 and a user equipment (UE) according to independent claim 5.

Preferred embodiments for the method and UE are defined in the appended dependent claims.

The above technical solutions are merely some parts of the embodiments of the present invention and various embodiments into which the technical features of the present invention are incorporated can be derived and understood by persons skilled in the art from the following detailed description of the present invention.

**Advantageous Effect**

According to the present invention, uplink/downlink signals can be efficiently transmitted/received. Therefore, overall throughput of a wireless communication system is improved.

According to an embodiment of the present invention, a new carrier which is not dedicated to a legacy system while maintaining compatibility with the legacy system can be aggregated with a carrier of the legacy system.

It will be appreciated by persons skilled in the art that that the effects that can be achieved through the present invention are not limited to what has been particularly described hereinabove and other advantages of the present invention will be more clearly understood from the following detailed description.

**Description of Drawings**

The accompanying drawings, which are included to provide a further understanding of the invention, illustrate embodiments of the invention and together with the description serve to explain the principle of the invention.

FIG. 1 illustrates the structure of a radio frame used in a wireless communication system.

FIG. 2 illustrates the structure of a downlink (DL)/uplink (UL) slot in a wireless communication system.

FIG. 3 illustrates a radio frame structure for transmission of a synchronization signal (SS).

FIG. 4 illustrates the structure of a DL subframe used in a wireless communication system.

FIG. 5 illustrates the structure of a UL subframe used in a wireless communication system.

FIG. 6 illustrates an uplink-downlink frame timing relationship.

FIG. 7 is a diagram for explaining single-carrier communication and multi-carrier communication.

FIG. 8 illustrates the state of cells in a system supporting carrier aggregation.

FIG. 10 illustrates a carrier aggregation situation of a 3GPP LTE-A band, which is a licensed band, and an unlicensed band (hereinafter, LTE-U band).

FIG. 11 illustrates a subframe configuration of a reserved resource period (RRP).

FIG. 12 illustrates a situation in which two cells are configured for a UE and the UE transmits UL signals by applying different timing advances (TAs) to the respective cells.

FIG. 13 is a block diagram illustrating elements of a transmitting device 10 and a receiving device 20 for implementing the present invention.

**MODE FOR CARRYING OUT THE INVENTION**

Reference will now be made in detail to the exemplary embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the invention. The following detailed description includes specific details in order to provide a thorough understanding of the present invention. However, it will be apparent to those skilled in the art that the present invention may be practiced without such specific details.

In some instances, known structures and devices are omitted or are shown in block diagram form, focusing on important features of the structures and devices, so as not to obscure the concept of the present invention. The same reference numbers will be used throughout this specification to refer to the same or like parts.

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi-carrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE. For convenience of description, it is assumed that the present invention is applied to 3GPP LTE/LTE-A. However, the technical features of the present invention are not limited thereto. For example, although the following detailed description is given based on a mobile communication system corresponding to a 3GPP LTE/LTE-A system, aspects of the present invention that are not specific to 3GPP LTE/LTE-A are applicable to other mobile communication systems.

For example, the present invention is applicable to contention based communication such as Wi-Fi as well as non-contention based communication as in the 3GPP LTE/LTE-A system in which an eNB allocates a DL/UL time/frequency resource to a UE and the UE receives a DL signal and transmits a UL signal according to resource allocation of the eNB. In a non-contention based communication scheme, an access point (AP) or a control node for controlling the AP allocates a resource for communication between the UE and the AP, whereas, in a contention based communication scheme, a communication resource is occupied through contention between UEs which desire to access the AP. The contention based communication scheme will now be described in brief. One type of the contention based communication scheme is carrier sense multiple access (CSMA). CSMA refers to a probabilistic media access control (MAC) protocol for confirming, before a node or a communication device transmits traffic on a shared transmission medium (also called a shared channel) such as a frequency band, that there is no other traffic on the same shared transmission medium. In CSMA, a transmitting device determines whether another transmission is being performed before attempting to transmit traffic to a receiving device. In other words, the transmitting device attempts to detect presence of a carrier from another transmitting device before attempting to perform transmission. Upon sensing the carrier, the transmitting device waits for another transmission device which is performing transmission to finish transmission, before performing transmission thereof. Consequently, CSMA can be a communication scheme based on the principle of "sense before transmit" or "listen before talk". A scheme for avoiding collision between transmitting devices in the contention based communication system using CSMA includes carrier sense multiple access with collision detection (CSMA/CD) and/or carrier sense multiple access with collision avoidance (CSMA/CA). CSMA/CD is a collision detection scheme in a wired local area network (LAN) environment. In CSMA/CD, a personal computer (PC) or a server which desires to perform communication in an Ethernet environment first confirms whether communication occurs on a network and, if another device carries data on the network, the PC or the server waits and then transmits data. That is, when two or more users (e.g. PCs, UEs, etc.) simultaneously transmit data, collision occurs between simultaneous transmission and CSMA/CD is a scheme for flexibly transmitting data by monitoring collision. A transmitting device using CSMA/CD adjusts data transmission thereof by sensing data transmission performed by another device using a specific rule. CSMA/CA is a MAC protocol specified in IEEE 802.11 standards. A wireless LAN (WLAN) system conforming to IEEE 802.11 standards does not use CSMA/CD which has been used in IEEE 802.3 standards and uses CA, i.e. a collision avoidance scheme. Transmission devices always sense carrier of a network and, if the network is empty, the transmission devices wait for determined time according to locations thereof registered in a list and then transmit data. Various methods are used to determine priority of the transmission devices in the list and to reconfigure priority. In a system according to some versions of IEEE 802.11 standards, collision may occur and, in this case, a collision sensing procedure is performed. A transmission device using CSMA/CA avoids collision between data transmission thereof and data transmission of another transmission device using a specific rule.

In the present invention, a user equipment (UE) may be a fixed or mobile device. Examples of the UE include various devices that transmit and receive user data and/or various kinds of control information to and from a base station (BS). The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc. In addition, in the present invention, a BS generally refers to a fixed station that performs communication with a UE and/or another BS, and exchanges various kinds of data and control information with the UE and another BS. The BS may be referred to as an advanced base station (ABS), a node-B (NB), an evolved node-B (eNB), a base transceiver system (BTS), an access point (AP), a processing server (PS), etc. In describing the present invention, a BS will be referred to as an eNB.

In the present invention, a node refers to a fixed point capable of transmitting/receiving a radio signal through communication with a UE. Various types of eNBs may be used as nodes irrespective of the terms thereof. For example, a BS, a node B (NB), an e-node B (eNB), a pico-cell eNB (PeNB), a home eNB (HeNB), a relay, a repeater, etc. may be a node. In addition, the node may not be an eNB. For example, the node may be a radio remote head (RRH) or a radio remote unit (RRU). The RRH or RRU generally has a lower power level than a power level of an eNB. Since the RRH or RRU (hereinafter, RRH/RRU) is generally connected to the eNB through a dedicated line such as an optical cable, cooperative communication between RRH/RRU and the eNB can be smoothly performed in comparison with cooperative communication between eNBs connected by a radio line. At least one antenna is installed per node. The antenna may mean a physical antenna or mean an antenna port, a virtual antenna, or an antenna group. A node may be referred to as a point.

In the present invention, a cell refers to a prescribed geographic region to which one or more nodes provide a communication service. Accordingly, in the present invention, communicating with a specific cell may mean communicating with an eNB or a node which provides a communication service to the specific cell. In addition, a DL/UL signal of a specific cell refers to a DL/UL signal from/to an eNB or a node which provides a communication service to the specific cell. A node providing UL/DL communication services to a UE is called a serving node and a cell to which UL/DL communication services are provided by the serving node is especially called a serving cell. Furthermore, channel status/quality of a specific cell refers to channel status/quality of a channel or communication link formed between an eNB or node which provides a communication service to the specific cell and a UE. In a LTE/LTE-A based system, The UE may measure DL channel state received from a specific node using cell-specific reference signal(s) (CRS(s)) transmitted on a CRS resource allocated by antenna port(s) of the specific node to the specific node and/or channel state information reference signal(s) (CSI-RS(s)) transmitted on a CSI-RS resource. Meanwhile, a 3GPP LTE/LTE-A system uses the concept of a cell in order to manage radio resources and a cell associated with the radio resources is distinguished from a cell of a geographic region.

A "cell" of a geographic region may be understood as coverage within which a node can provide a service using a carrier and a "cell" of a radio resource is associated with bandwidth (BW) which is a frequency range configured by the carrier. Since DL coverage, which is a range within which the node is capable of transmitting a valid signal, and UL coverage, which is a range within which the node is capable of receiving the valid signal from the UE, depends upon a carrier carrying the signal, coverage of the node may be associated with coverage of "cell" of a radio resource used by the node. Accordingly, the term "cell" may be used to indicate service coverage by the node sometimes, a radio resource at other times, or a range that a signal using a radio resource can reach with valid strength at other times. The "cell" of the radio resource will be described later in more detail.

3GPP LTE/LTE-A standards define DL physical channels corresponding to resource elements carrying information derived from a higher layer and DL physical signals corresponding to resource elements which are used by a physical layer but which do not carry information derived from a higher layer. For example, a physical downlink shared channel (PDSCH), a physical broadcast channel (PBCH), a physical multicast channel (PMCH), a physical control format indicator channel (PCFICH), a physical downlink control channel (PDCCH), and a physical hybrid ARQ indicator channel (PHICH) are defined as the DL physical channels, and a reference signal and a synchronization signal are defined as the DL physical signals. A reference signal (RS), also called a pilot, refers to a special waveform of a predefined signal known to both a BS and a UE. For example, a cell-specific RS (CRS), a UE-specific RS (UE-RS), a positioning RS (PRS), and channel state information RS (CSI-RS) may be defined as DL RSs. Meanwhile, the 3GPP LTE/LTE-A standards define UL physical channels corresponding to resource elements carrying information derived from a higher layer and UL physical signals corresponding to resource elements which are used by a physical layer but which do not carry information derived from a higher layer. For example, a physical uplink shared channel (PUSCH), a physical uplink control channel (PUCCH), and a physical random access channel (PRACH) are defined as the UL physical channels, and a demodulation reference signal (DMRS) for a UL control/data signal and a sounding reference signal (SRS) used for UL channel measurement are defined as the UL physical signal.

In the present invention, a physical downlink control channel (PDCCH), a physical control format indicator channel (PCFICH), a physical hybrid automatic retransmit request indicator channel (PHICH), and a physical downlink shared channel (PDSCH) refer to a set of time-frequency resources or resource elements (REs) carrying downlink control information (DCI), a set of time-frequency resources or REs carrying a control format indicator (CFI), a set of time-frequency resources or REs carrying downlink acknowledgement (ACK)/negative ACK (NACK), and a set of time-frequency resources or REs carrying downlink data, respectively. In addition, a physical uplink control channel (PUCCH), a physical uplink shared channel (PUSCH) and a physical random access channel (PRACH) refer to a set of time-frequency resources or REs carrying uplink control information (UCI), a set of time-frequency resources or REs carrying uplink data and a set of time-frequency resources or REs carrying random access signals, respectively. In the present invention, in particular, a time-frequency resource or RE that is assigned to or belongs to PDCCH/PCFICH/PHICH/PDSCH/PUCCH/PUSCH/PRACH is referred to as PDCCH/PCFICH/PHICH/PDSCH/PUCCH/PUSCH/PRACH RE or PDCCH/PCFICH/PHICH/PDSCH/PUCCH/PUSCH/PRACH time-frequency resource, respectively. Therefore, in the present invention, PUCCH/PUSCH/PRACH transmission of a UE is conceptually identical to UCI/uplink data/random access signal transmission on PUSCH/PUCCH/PRACH, respectively. In addition, PDCCH/PCFICH/PHICH/PDSCH transmission of an eNB is conceptually identical to downlink data/DCI transmission on PDCCH/PCFICH/PHICH/PDSCH, respectively.

Hereinafter, OFDM symbol/subcarrier/RE to or for which CRS/DMRS/CSI-RS/SRS/UE-RS is assigned or configured will be referred to as CRS/DMRS/CSI-RS/SRS/UE-RS symbol/carrier/subcarrier/RE. For example, an OFDM symbol to or for which a tracking RS (TRS) is assigned or configured is referred to as a TRS symbol, a subcarrier to or for which the TRS is assigned or configured is referred to as a TRS subcarrier, and an RE to or for which the TRS is assigned or configured is referred to as a TRS RE. In addition, a subframe configured for transmission of the TRS is referred to as a TRS subframe. Moreover, a subframe in which a broadcast signal is transmitted is referred to as a broadcast subframe or a PBCH subframe and a subframe in which a synchronization signal (e.g. PSS and/or SSS) is transmitted is referred to a synchronization signal subframe or a PSS/SSS subframe. OFDM symbol/subcarrier/RE to or for which PSS/SSS is assigned or configured is referred to as PSS/SSS symbol/subcarrier/RE, respectively.

In the present invention, a CRS port, a UE-RS port, a CSI-RS port, and a TRS port refer to an antenna port configured to transmit a CRS, an antenna port configured to transmit a UE-RS, an antenna port configured to transmit a CSI-RS, and an antenna port configured to transmit a TRS, respectively. Antenna ports configured to transmit CRSs may be distinguished from each other by the locations of REs occupied by the CRSs according to CRS ports, antenna ports configured to transmit UE-RSs may be distinguished from each other by the locations of REs occupied by the UE-RSs according to UE-RS ports, and antenna ports configured to transmit CSI-RSs may be distinguished from each other by the locations of REs occupied by the CSI-RSs according to CSI-RS ports. Therefore, the term CRS/UE-RS/CSI-RS/TRS ports may also be used to indicate a pattern of REs occupied by CRSs/UE-RSs/CSI-RSs/TRSs in a predetermined resource region.

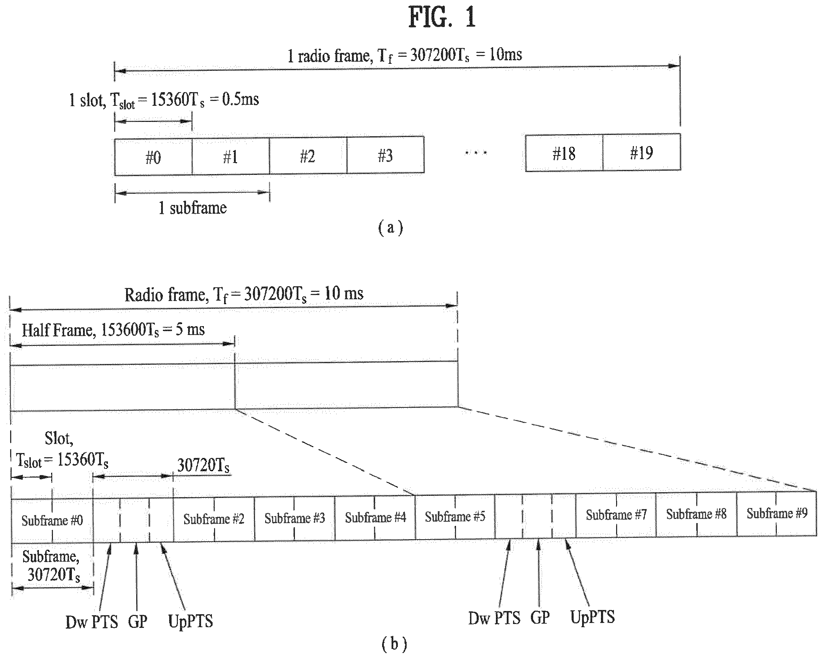

FIG. 1 illustrates the structure of a radio frame used in a wireless communication system.

Specifically, FIG. 1(a) illustrates an exemplary structure of a radio frame which can be used in frequency division multiplexing (FDD) in 3GPP LTE/LTE-A and FIG. 1(b) illustrates an exemplary structure of a radio frame which can be used in time division multiplexing (TDD) in 3GPP LTE/LTE-A. The frame structure of FIG. 1(a) is referred to as frame structure type 1 (FS1) and the frame structure of FIG. 1(b) is referred to as frame structure type 2 (FS2).

Referring to FIG. 1, a 3GPP LTE/LTE-A radio frame is 10ms ($307,200T_s$) in duration. The radio frame is divided into 10 subframes of equal size. Subframe numbers may be assigned to the 10 subframes within one radio frame, respectively. Here, $T_s$ denotes sampling time where $T_s=1/(2048*15kHz)$. Each subframe is 1ms long and is further divided into two slots. 20 slots are sequentially numbered from 0 to 19 in one radio frame. Duration of each slot is 0.5ms. A time interval in which one subframe is transmitted is defined as a transmission time interval (TTI). Time resources may be distinguished by a radio frame number (or radio frame index), a subframe number (or subframe index), a slot number (or slot index), and the like.

A radio frame may have different configurations according to duplex modes. In FDD mode for example, since DL transmission and UL transmission are discriminated according to frequency, a radio frame for a specific frequency band operating on a carrier frequency includes either DL subframes or UL subframes. In TDD mode, since DL transmission and UL transmission are discriminated according to time, a radio frame for a specific frequency band operating on a carrier frequency includes both DL subframes and UL subframes.

Table 1 shows an exemplary UL-DL configuration within a radio frame in TDD mode.

Table 1

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 1, D denotes a DL subframe, U denotes a UL subframe, and S denotes a special subframe. The special subframe includes three fields, i.e. downlink pilot time slot (DwPTS), guard period (GP), and uplink pilot time slot (UpPTS). DwPTS is a time slot reserved for DL transmission and UpPTS is a time slot reserved for UL transmission. Table 2 shows an example of the special subframe configuration.

Table 2

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | $4384 \cdot T_s$ | $5120 \cdot T_s$ | $7680 \cdot T_s$ | $4384 \cdot T_s$ | $5120 \cdot T_s$ |
| 5 | $6592 \cdot T_s$ | | | $20480 \cdot T_s$ | | |
| 6 | $19760 \cdot T_s$ | | | $23040 \cdot T_s$ | | |
| 7 | $21952 \cdot T_s$ | | | - | - | - |
| 8 | $24144 \cdot T_s$ | | | - | - | - |

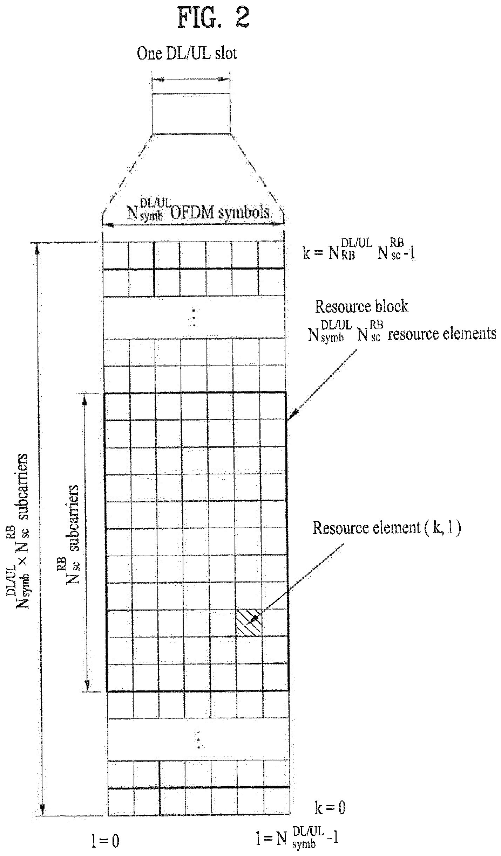

FIG. 2 illustrates the structure of a DL/UL slot structure in a wireless communication system. In particular, FIG. 2 illustrates the structure of a resource grid of a 3GPP LTE/LTE-A system. One resource grid is defined per antenna port..

Referring to FIG. 2, a slot includes a plurality of orthogonal frequency division multiplexing (OFDM) symbols in the time domain and includes a plurality of resource blocks (RBs) in the frequency domain. The OFDM symbol may refer to one symbol duration. Referring to FIG. 2, a signal transmitted in each slot may be expressed by a resource grid including $N^{DL/UL}_{RB} * N^{RB}_{sc}$ subcarriers and $N^{DL/UL}_{symb}$ OFDM symbols. $N^{DL}_{RB}$ denotes the number of RBs in a DL slot and $N^{UL}_{RB}$ denotes the number of RBs in a UL slot. $N^{DL}_{RB}$ and $N^{UL}_{RB}$ depend on a DL transmission bandwidth and a UL transmission bandwidth, respectively. $N^{DL}_{symb}$ denotes the number of OFDM symbols in a DL slot, $N^{UL}_{symb}$ denotes the number of OFDM symbols in a UL slot, and $N^{RB}_{sc}$ denotes the number of subcarriers configuring one RB.

An OFDM symbol may be referred to as an OFDM symbol, a single carrier frequency division multiplexing (SC-FDM) symbol, etc. according to multiple access schemes. The number of OFDM symbols included in one slot may be varied according to channel bandwidths and CP lengths. For example, in a normal cyclic prefix (CP) case, one slot includes 7 OFDM symbols. In an extended CP case, one slot includes 6 OFDM symbols. Although one slot of a subframe including 7 OFDM symbols is shown in FIG. 2 for convenience of description, embodiments of the present invention are similarly applicable to subframes having a different number of OFDM symbols. Referring to FIG. 2, each OFDM symbol includes $N^{DL/UL}RB * N^{RB}_{sc}$ subcarriers in the frequency domain. The type of the subcarrier may be divided into a data subcarrier for data transmission, a reference signal (RS) subcarrier for RS transmission, and a null subcarrier for a guard band and a DC component. The null subcarrier for the DC component is unused and is mapped to a carrier frequency $f_0$ in a process of generating an OFDM signal or in a frequency up-conversion process. The carrier frequency is also called a center frequency $f_c$.

One RB is defined as $N^{DL/UL}_{symb}$ (e.g. 7) consecutive OFDM symbols in the time domain and as $N^{RB}_{sc}$ (e.g. 12) consecutive subcarriers in the frequency domain. For reference, a resource composed of one OFDM symbol and one subcarrier is referred to a resource element (RE) or tone. Accordingly, one RB includes $N^{DL/UL}_{symb} * N^{RB}_{sc}$ REs. Each RE within a resource grid may be uniquely defined by an index pair $(k, l)$ within one slot. $k$ is an index ranging from 0 to $N^{DL/UL}_{RB} * N^{RB}_{sc}-1$ in the frequency domain, and $l$ is an index ranging from 0 to $N^{DL/UL}_{symb}1-1$ in the time domain.

Meanwhile, one RB is mapped to one physical resource block (PRB) and one virtual resource block (VRB). A PRB is defined as $N^{DL}_{symb}$ (e.g. 7) consecutive OFDM or SC-FDM symbols in the time domain and $N^{RB}_{sc}$ (e.g. 12) consecutive subcarriers in the frequency domain. Accordingly, one PRB is configured with $N^{DL/UL}_{symb} * N^{RB}_{sc}$ REs. In one subframe, two RBs each located in two slots of the subframe while occupying the same $N^{RB}_{sc}$ consecutive subcarriers are referred to as a physical resource block (PRB) pair. Two RBs configuring a PRB pair have the same PRB number (or the same PRB index).

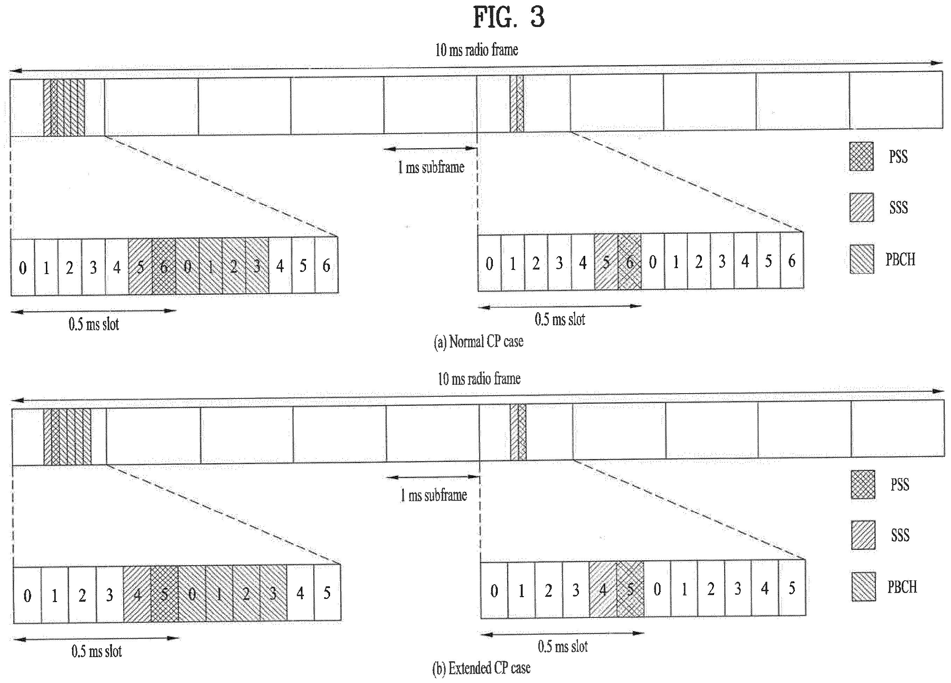

FIG. 3 illustrates a radio frame structure for transmission of a synchronization signal (SS). Specifically, FIG. 3 illustrates a radio frame structure for transmission of an SS and a PBCH in frequency division duplex (FDD), wherein FIG. 3(a) illustrates transmission locations of an SS and a PBCH in a radio frame configured as a normal cyclic prefix (CP) and FIG. 3(b) illustrates transmission locations of an SS and a PBCH in a radio frame configured as an extended CP.

If a UE is powered on or newly enters a cell, the UE performs an initial cell search procedure of acquiring time and frequency synchronization with the cell and detecting a physical cell identity $N^{cell}_{ID}$ of the cell. To this end, the UE may establish synchronization with the eNB by receiving synchronization signals, e.g. a primary synchronization signal (PSS) and a secondary synchronization signal (SSS), from the eNB and obtain information such as a cell identity (ID).

An SS will be described in more detail with reference to FIG. 3. An SS is categorized into a PSS and an SSS. The PSS is used to acquire time-domain synchronization of OFDM symbol synchronization, slot synchronization, etc. and/or frequency-domain synchronization and the SSS is used to acquire frame synchronization, a cell group ID, and/or CP configuration of a cell (i.e. information as to whether a normal CP is used or an extended CP is used). Referring to FIG. 3, each of a PSS and an SSS is transmitted on two OFDM symbols of every radio frame. More specifically, SSs are transmitted in the first slot of subframe 0 and the first slot of subframe 5, in consideration of a global system for mobile communication (GSM) frame length of 4.6 ms for facilitation of inter-radio access technology (inter-RAT) measurement. Especially, a PSS is transmitted on the last OFDM symbol of the first slot of subframe 0 and on the last OFDM symbol of the first slot of subframe 5 and an SSS is transmitted on the second to last OFDM symbol of the first slot of subframe 0 and on the second to last OFDM symbol of the first slot of subframe 5. A boundary of a corresponding radio frame may be detected through the SSS. The PSS is transmitted on the last OFDM symbol of a corresponding slot and the SSS is transmitted on an OFDM symbol immediately before an OFDM symbol on which the PSS is transmitted. A transmit diversity scheme of an SS uses only a single antenna port and standards therefor are not separately defined.

Referring to FIG. 3, upon detecting a PSS, a UE may discern that a corresponding subframe is one of subframe 0 and subframe 5 because the PSS is transmitted every 5ms but the UE cannot discern whether the subframe is subframe 0 or subframe 5. Accordingly, the UE cannot recognize the boundary of a radio frame only by the PSS. That is, frame synchronization cannot be acquired only by the PSS. The UE detects the boundary of a radio frame by detecting an SSS which is transmitted twice in one radio frame with different sequences.

A UE, which has demodulated a DL signal by performing a cell search procedure using an SSS and determined time and frequency parameters necessary for transmitting a UL signal at an accurate time, can communicate with an eNB only after acquiring system information necessary for system configuration of the UE from the eNB.

The system information is configured by a master information block (MIB) and system information blocks (SIBs). Each SIB includes a set of functionally associated parameters and is categorized into an MIB, SIB Type 1 (SIB1), SIB Type 2 (SIB2), and SIB3 to SIB8 according to included parameters. The MIB includes most frequency transmitted parameters which are essential for initial access of the UE to a network of the eNB. SIB1 includes parameters needed to determine if a specific cell is suitable for cell selection, as well as information about time-domain scheduling of the other SIBs.

The UE may receive the MIB through a broadcast channel (e.g. a PBCH). The MIB includes DL bandwidth (BW), PHICH configuration, and a system frame number SFN. Accordingly, the UE can be explicitly aware of information about the DL BW, SFN, and PHICH configuration by receiving the PBCH. Meanwhile, information which can be implicitly recognized by the UE through reception of the PBCH is the number of transmit antenna ports of the eNB. Information about the number of transmit antennas of the eNB is implicitly signaled by masking (e.g. XOR operation) a sequence corresponding to the number of transmit antennas to a 16-bit cyclic redundancy check (CRC) used for error detection of the PBCH.

The PBCH is mapped to four subframes during 40ms. The time of 40ms is blind-detected and explicit signaling about 40ms is not separately present. In the time domain, the PBCH is transmitted on OFDM symbols 0 to 3 of slot 1 in subframe 0 (the second slot of subframe 0) of a radio frame.

In the frequency domain, a PSS/SSS and a PBCH are transmitted only in a total of 6 RBs, i.e. a total of 72 subcarriers, irrespective of actual system BW, wherein 3 RBs are in the left and the other 3 RBs are in the right centering on a DC subcarrier on corresponding OFDM symbols. Therefore, the UE is configured to detect or decode the SS and the PBCH irrespective of DL BW configured for the UE.

After initial cell search, a UE which has accessed a network of an eNB may acquire more detailed system information by receiving a PDCCH and a PDSCH according to information carried on the PDCCH.

After initial cell search, the UE may perform a random access procedure to complete access to the eNB. To this end, the UE may transmit a preamble through a physical random access channel (PRACH) and receive a response message to the preamble through a PDCCH and a PDSCH. In contention based random access, the UE may perform additional PRACH transmission and a contention resolution procedure of a PDCCH and a PDSCH corresponding to the PDCCH.

After performing the aforementioned procedure, the UE may perform PDDCH/PDSCH reception and PUSCH/PUCCH transmission as general uplink/downlink transmission procedures.

The random access procedure is also called RACH (random access channel) procedure. The random access procedure is used for initial access, uplink synchronization adjustment, resource assignment, handover, etc. The random access procedure is classified into a contention-based process and a dedicated (i.e. non-contention-based) process. The contention-based random access procedure includes initial access and is normally used, whereas the dedicated random access procedure is limitedly used for handover. In the contention-based random access procedure, a UE randomly select a RACH preamble sequence. Accordingly, a plurality of UEs can simultaneously transmit the same RACH preamble sequence and thus a contention resolution procedure is not needed. In the dedicated random access procedure, a UE uses a RACH preamble sequence uniquely allocated thereto by an eNB. Accordingly, the UE can perform the random access procedure without colliding with other UEs.

The contention-based random access procedure has the following four steps. Hereinafter, messages transmitted in steps 1 to 4 may be respectively referred to as Msg 1 to Msg 4.

- Step 1: RACH preamble (via PRACH) (UE to eNB)
- Step 2: Random access response (RAR) (via PDCCH and PDSCH) (eNB to UE)
- Step 3: Layer 2/Layer 3 message (via PUSCH) (UE to eNB)
- Step 4: Contention resolution message (eNB to UE)

The dedicated random access procedure includes the following three steps. Hereinafter, uplink transmission (i.e. step 3) corresponding to a RAR may be performed as a part of the random access procedure. The dedicated random access procedure can be triggered using a PDCCH (hereinafter, referred to as PDCCH order) used for an eNB to command RACH preamble transmission.

- Step 0: PACH preamble allocation through dedicated signaling (eNB to UE)
- Step 1: RACH preamble (via PRACH) (UE to eNB)
- Step 2: RAR (via PDCCH and PDSCH) (eNB to UE)

After transmission of RACH preamble, the UE attempts to receive a random access response (RAR) within a predetermined time window. Specifically, the UE attempts to detect a PDCCH (hereinafter, referred to as RA-RNTI PDCCH) having an RA-RNTI (Random Access RNTI) (e.g., CRC is masked with RA-RNTI in the PDCCH) within the time window. The UE checks whether a RAR therefor is present in a PDSCH corresponding to the RA-RNTI PDCCH during RA-RNTI PDCCH detection. The RAR includes timing advance (TA) information indicating timing offset information for UL synchronization, UL resource allocation information (UL grant information), a temporary UE identifier (e.g., temporary cell-RNTI, TC-RNTI), etc. The UE can perform UL transmission (e.g., Msg3) in accordance with resource allocation information and TA value in the RAR. HARQ is applied to UL transmission corresponding to the RAR. Accordingly, the UE can receive acknowledgement information (e.g., PHICH) corresponding to Msg 3 after transmission of Msg 3.

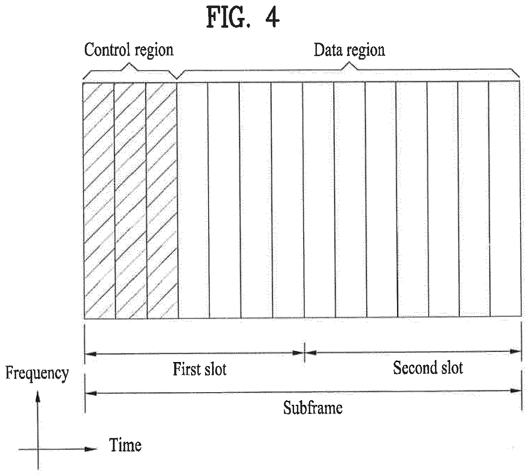

FIG. 4 illustrates the structure of a DL subframe used in a wireless communication system.

Referring to FIG. 4, a DL subframe is divided into a control region and a data region in the time domain. Referring to FIG. 4, a maximum of 3 (or 4) OFDM symbols located in a front part of a first slot of a subframe corresponds to the control region. Hereinafter, a resource region for PDCCH transmission in a DL subframe is referred to as a PDCCH region. OFDM symbols other than the OFDM symbol(s) used in the control region correspond to the data region to which a physical downlink shared channel (PDSCH) is allocated. Hereinafter, a resource region available for PDSCH transmission in the DL subframe is referred to as a PDSCH region. Examples of a DL control channel used in 3GPP LTE include a physical control format indicator channel (PCFICH), a physical downlink control channel (PDCCH), a physical hybrid ARQ indicator channel (PHICH), etc. The PCFICH is transmitted in the first OFDM symbol of a subframe and carries information about the number of OFDM symbols available for transmission of a control channel within a subframe. The PHICH carries a HARQ (Hybrid Automatic Repeat Request) ACK/NACK (acknowledgment/negative-acknowledgment) signal as a response to UL transmission.

The control information transmitted through the PDCCH will be referred to as downlink control information (DCI). The DCI includes resource allocation information for a UE or UE group and other control information. Transmit format and resource allocation information of a downlink shared channel (DL-SCH) are referred to as DL scheduling information or DL grant. Transmit format and resource allocation information of an uplink shared channel (UL-SCH) are referred to as UL scheduling information or UL grant. The size and usage of the DCI carried by one PDCCH are varied depending on DCI formats. The size of the DCI may be varied depending on a coding rate. In the current 3GPP LTE system, various formats are defined, wherein formats 0 and 4 are defined for a UL, and formats 1, 1A, 1B, 1C, ID, 2, 2A, 2B, 2C, 3 and 3A are defined for a DL. Combination selected from control information such as a hopping flag, RB allocation, modulation coding scheme (MCS), redundancy version (RV), new data indicator (NDI), transmit power control (TPC), cyclic shift demodulation reference signal (DM RS), UL index, channel quality information (CQI) request, DL assignment index, HARQ process number, transmitted precoding matrix indicator (TPMI), precoding matrix indicator (PMI) information is transmitted to the UE as the DCI.

A plurality of PDCCHs may be transmitted within a control region. A UE may monitor the plurality of PDCCHs. An eNB determines a DCI format depending on the DCI to be transmitted to the UE, and attaches cyclic redundancy check (CRC) to the DCI. The CRC is masked (or scrambled) with an identifier (for example, a radio network temporary identifier (RNTI)) depending on usage of the PDCCH or owner of the PDCCH. For example, if the PDCCH is for a specific UE, the CRC may be masked with an identifier (for example, cell-RNTI (C-RNTI)) of the corresponding UE. If the PDCCH is for a paging message, the CRC may be masked with a paging identifier (for example, paging-RNTI (P-RNTI)). If the PDCCH is for system information (in more detail, system information block (SIB)), the CRC may be masked with system information RNTI (SI-RNTI). If the PDCCH is for a random access response, the CRC may be masked with a random access RNTI (RA-RNTI). For example, CRC masking (or scrambling) includes XOR operation of CRC and RNTI at the bit level.

The PDCCH is transmitted on an aggregation of one or a plurality of continuous control channel elements (CCEs). The CCE is a logic allocation unit used to provide a coding rate based on the status of a radio channel to the PDCCH. The CCE corresponds to a plurality of resource element groups (REGs). For example, one CCE corresponds to nine resource element groups (REGs), and one REG corresponds to four REs. Four QPSK symbols are mapped to each REG. A resource element (RE) occupied by the reference signal (RS) is not included in the REG. Accordingly, the number of REGs within given OFDM symbols is varied depending on the presence of the RS. The REGs are also used for other downlink control channels (that is, PDFICH and PHICH). A PDCCH format and the number of DCI bits are determined in accordance with the number of CCEs. The CCEs are numbered and consecutively used. To simplify the decoding process, a PDCCH having a format including $n$ CCEs may be initiated only on CCEs assigned numbers corresponding to multiples of $n$. The number of CCEs used for transmission of a specific PDCCH is determined by a network or the eNB in accordance with channel status. For example, one CCE may be required for a PDCCH for a UE (for example, adjacent to eNB) having a good downlink channel. However, in case of a PDCCH for a UE (for example, located near the cell edge) having a poor channel, eight CCEs may be required to obtain sufficient robustness. Additionally, a power level of the PDCCH may be adjusted to correspond to a channel status.

Meanwhile, if RRH technology, cross-carrier scheduling technology, etc. are introduced, the amount of PDCCH which should be transmitted by the eNB is gradually increased. However, since a size of a control region within which the PDCCH may be transmitted is the same as before, PDCCH transmission acts as a bottleneck of system throughput. Although channel quality may be improved by the introduction of the aforementioned multi-node system, application of various communication schemes, etc., the introduction of a new control channel is required to apply the legacy communication scheme and the carrier aggregation technology to a multi-node environment. Due to the need, a configuration of a new control channel in a data region (hereinafter, referred to as PDSCH region) not the legacy control region (hereinafter, referred to as PDCCH region) has been discussed. Hereinafter, the new control channel will be referred to as an enhanced PDCCH (hereinafter, referred to as EPDCCH). The EPDCCH may be configured within rear OFDM symbols starting from a configured OFDM symbol, instead of front OFDM symbols of a subframe. The EPDCCH may be configured using continuous frequency resources, or may be configured using discontinuous frequency resources for frequency diversity. By using the EPDCCH, control information per node may be transmitted to a UE, and a problem that a legacy PDCCH region may not be sufficient may be solved. For reference, the PDCCH may be transmitted through the same antenna port(s) as that (those) configured for transmission of a CRS, and a UE configured to decode the PDCCH may demodulate or decode the PDCCH by using the CRS. Unlike the PDCCH transmitted based on the CRS, the EPDCCH is transmitted based on the demodulation RS (hereinafter, DMRS). Accordingly, the UE decodes/demodulates the PDCCH based on the CRS and decodes/demodulates the EPDCCH based on the DMRS. The DMRS associated with EPDCCH is transmitted on the same antenna port $p \in \{107,108,109,110\}$ as the associated EPDCCH physical resource, is present for EPDCCH demodulation only if the EPDCCH transmission is associated with the corresponding antenna port, and is transmitted only on the PRB(s) upon which the corresponding EPDCCH is mapped. For example, the REs occupied by the UE-RS(s) of the antenna port 7 or 8 may be occupied by the DMRS(s) of the antenna port 107 or 108 on the PRB to which the EPDCCH is mapped, and the REs occupied by the UE-RS(s) of antenna port 9 or 10 may be occupied by the DMRS(s) of the antenna port 109 or 110 on the PRB to which the EPDCCH is mapped. In other words, a certain number of REs are used on each RB pair for transmission of the DMRS for demodulation of the EPDCCH regardless of the UE or cell if the type of EPDCCH and the number of layers are the same as in the case of the UE-RS for demodulation of the PDSCH. Hereinafter, a PDCCH and an EPDCCH are simply referred to as PDCCHs except in cases specific to the EPDCCH. The present invention may be applied to an EPDCCH, a PUSCH, and a PDSCH and/or a PUSCH scheduled by the EPDCCH as well as to a PDCCH, a PUCCH, and a PDSCH and/or a PUSCH scheduled by the PDCCH.

In a 3GPP LTE/LTE-A system, a CCE set in which a PDCCH can be located for each UE is defined. A CCE set in which the UE can detect a PDCCH thereof is referred to as a PDCCH search space or simply as a search space (SS). An individual resource on which the PDCCH can be transmitted in the SS is called a PDCCH candidate. A set of PDCCH candidates that the UE is to monitor is defined as the SS. SSs for respective PDCCH formats may have different sizes and a dedicated SS and a common SS are defined. The dedicated SS is a UE-specific SS (UE SS) and is configured for each individual UE. The common SS (CSS) is configured for a plurality of UEs.

An eNB transmits an actual PDCCH (DCI) on a PDCCH candidate in a search space and a UE monitors the search space to detect the PDCCH (DCI). Here, monitoring implies attempting to decode each PDCCH in the corresponding SS according to all monitored DCI formats. The UE may detect a PDCCH thereof by monitoring a plurality of PDCCHs. Basically, the UE does not know the location at which a PDCCH thereof is transmitted. Therefore, the UE attempts to decode all PDCCHs of the corresponding DCI format for each subframe until a PDCCH having an ID thereof is detected and this process is referred to as blind detection (or blind decoding (BD)).

For example, it is assumed that a specific PDCCH is CRC-masked with a radio network temporary identity (RNTI) "A" and information about data transmitted using a radio resource "B" (e.g. frequency location) and using transport format information "C" (e.g. transmission block size, modulation scheme, coding information, etc.) is transmitted in a specific DL subframe. Then, the UE monitors the PDCCH using RNTI information thereof. The UE having the RNTI "A" receives the PDCCH and receives the PDSCH indicated by "B" and "C" through information of the received PDCCH.

Generally, a DCI format capable of being transmitted to a UE differs according to a transmission mode (TM) configured for the UE. In other words, for the UE configured for a specific TM, only some DCI format(s) corresponding to the specific TM rather than all DCI formats may be used. For example, the UE is semi-statically configured by higher layers so as to receive PDSCH data signaled through a PDCCH according to one of a plurality of predefined TMs. To maintain operation load of the UE according to blind decoding attempt at a predetermined level or less, all DCI formats are not always simultaneously searched by the UE.

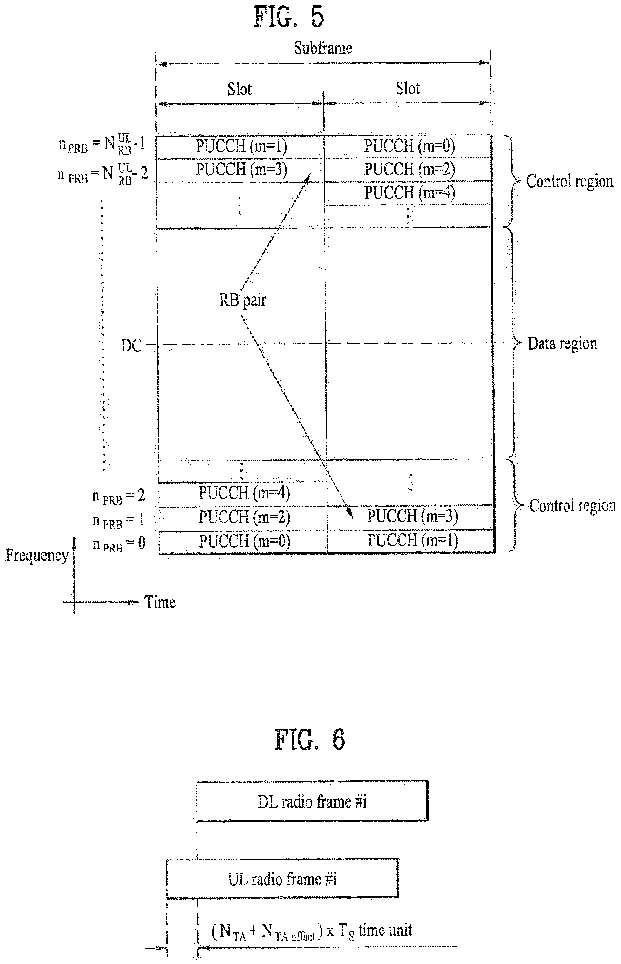

FIG. 5 illustrates the structure of a UL subframe used in a wireless communication system.

Referring to FIG. 5, a UL subframe may be divided into a data region and a control region in the frequency domain. One or several PUCCHs may be allocated to the control region to deliver UCI. One or several PUSCHs may be allocated to the data region of the UE subframe to carry user data.

In the UL subframe, subcarriers distant from a direct current (DC) subcarrier are used as the control region. In other words, subcarriers located at both ends of a UL transmission BW are allocated to transmit UCI. A DC subcarrier is a component unused for signal transmission and is mapped to a carrier frequency $f_0$ in a frequency up-conversion process. A PUCCH for one UE is allocated to an RB pair belonging to resources operating on one carrier frequency and RBs belonging to the RB pair occupy different subcarriers in two slots. The PUCCH allocated in this way is expressed by frequency hopping of the RB pair allocated to the PUCCH over a slot boundary. If frequency hopping is not applied, the RB pair occupies the same subcarriers.

The PUCCH may be used to transmit the following control information.

- Scheduling request (SR): SR is information used to request a UL-SCH resource and is transmitted using an on-off keying (OOK) scheme.
- HARQ-ACK: HARQ-ACK is a response to a PDCCH and/or a response to a DL data packet (e.g. a codeword) on a PDSCH. HARQ-ACK indicates whether the PDCCH or PDSCH has been successfully received. 1-bit HARQ-ACK is transmitted in response to a single DL codeword and 2-bit HARQ-ACK is transmitted in response to two DL codewords. A HARQ-ACK response includes a positive ACK (simply, ACK), negative ACK (NACK), discontinuous transmission (DTX), or NACK/DRX. HARQ-ACK is used interchangeably with HARQ ACK/NACK and ACK/NACK.
- Channel state information (CSI): CSI is feedback information for a DL channel. CSI may include channel quality information (CQI), a precoding matrix indicator (PMI), a precoding type indicator, and/or a rank indicator (RI). In the CSI, multiple input multiple output (MIMO)-related feedback information includes the RI and the PMI. The RI indicates the number of streams or the number of layers that the UE can receive through the same time-frequency resource. The PMI is a value reflecting a space characteristic of a channel, indicating an index of a precoding matrix preferred by a UE for DL signal transmission based on a metric such as an SINR. The CQI is a value of channel strength, indicating a received SINR that can be obtained by the UE generally when an eNB uses the PMI.

To report the CSI, time and frequency resources that can be used by the UE are controlled by the eNB. For example, the eNB commands the UE to feed back DL CSI by allocating a PUCCH or a PUSCH to the UE in order to obtain the DL CSI.

CSI reporting is periodically or aperiodically configured. Periodic CSI report is transmitted by the UE on the PUCCH except in a special case (e.g. when the UE is not configured for simultaneous PUSCH and PUCCH transmission and when a PUCCH transmission timing collides with a subframe with PUSCH allocation). Aperiodic CSI report is triggered by a CSI request field included in the DCI for scheduling of UL data (e.g. DCI of DCI format 0 or 4) (hereinafter, a UL DCI format). The UE, which has decoded the UL DCI format or a random access response grant for a specific serving cell (hereinafter, serving cell $c$) in subframe $n$, performs aperiodic CSI reporting using the PUSCH in subframe $n+k$ on serving cell $c$ when the CSI request field is set to trigger CSI report and when the CSI request field is not reserved. The PUSCH corresponds to a PUSCH transmitted in subframe $n+k$ according to the UL DCI format decoded in subframe $n$. In the case of FDD, $k=4$. In the case of TDD, $k$ is given by the following table.

Table 3

| TDD UL/DL Configuration | subframe number $n$ | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

For example, when a UE for which a TDD UL/DL configuration is 6 detects the UL DCI format for serving cell c in subframe 9, the UE performs aperiodic CSI reporting triggered by the CSI request field in the detected UL DCI format on the PUSCH of serving cell c in subframe 9+5, i.e. in subframe 4 of a radio frame following a radio frame including subframe 9 in which the UL DCI format is detected.

The CSI request field is 1 bit or 2 bits in length. If the CSI request field is 1 bit, the CSI request field set to '1' triggers aperiodic CSI report for serving cell c. If the CSI request field is 2 bits, aperiodic CSI report corresponding to, for example, a value of the following table is triggered.

Table 4

| Value of CSI request field | Description |
|---|---|
| '00' | No aperiodic CSI report is triggered |
| '01' | Aperiodic CSI report is triggered for serving cell c |
| '10' | Aperiodic CSI report is triggered for a 1st set of serving cells configured by higher layers |
| '11' | Aperiodic CSI report is triggered for a 2nd set of serving cells configured by higher layers |

FIG. 6 illustrates a UL-DL frame timing relationship.

Referring to FIG. 6, a UE starts to transmit UL radio frame $i$ $(N_{TA}+N_{TAoffset})^*T_s$ seconds earlier than a corresponding DL radio frame. Here, $N_{TA}$ indicates a timing offset between UL and DL radio frames in the UE, expressed in units of $T_s$. $N_{TAoffset}$ indicates a fixed timing advance offset expressed in units of $T_s$. In an LTE system, $0 \le N_{TA} \le 20512$, $N_{TAoffset} = 0$ in FDD, and $N_{TAoffset} = 624$ in TDD. $N_{TAoffset}$ is a value pre-recognized by an eNB and a UE. If $N_{TA}$ is indicated by a timing advance command (TAC) in a random access procedure, the UE adjusts the transmission timing of a UL signal (e.g. a PUCCH/PUSCH/SRS) by the above equation. The UL transmission timing is set to a multiple of $16T_s$. $T_s$ is a sampling time, for example, 1/30720(ms) (refer to FIG. 1). The TAC indicates variation of a UL timing based on a current UL timing. A TAC $T_A$ in an RAR is 11 bits, indicating a value ranging from 0 to 1282 and a timing adjustment value $N_{TA}$ is given as $N_{TA} = T_A * 16$. Otherwise, the TAC $T_A$ is 6 bits, indicating a value ranging from 0 to 63 and the timing adjustment value $N_{TA}$ is given as $N_{TA,new} = N_{TA,old} + (T_A-31)^*16$. A TAC received in subframe $n$ is applied after subframe n+6. In FDD, the transmission timing of UL subframe $n$ is advanced based on the start timing of DL subframe $n$ as illustrated in FIG. 6. On the other hand, in TDD, the transmission timing of UL subframe $n$ is advanced based on the end timing of DL subframe $n+1$ (not shown).

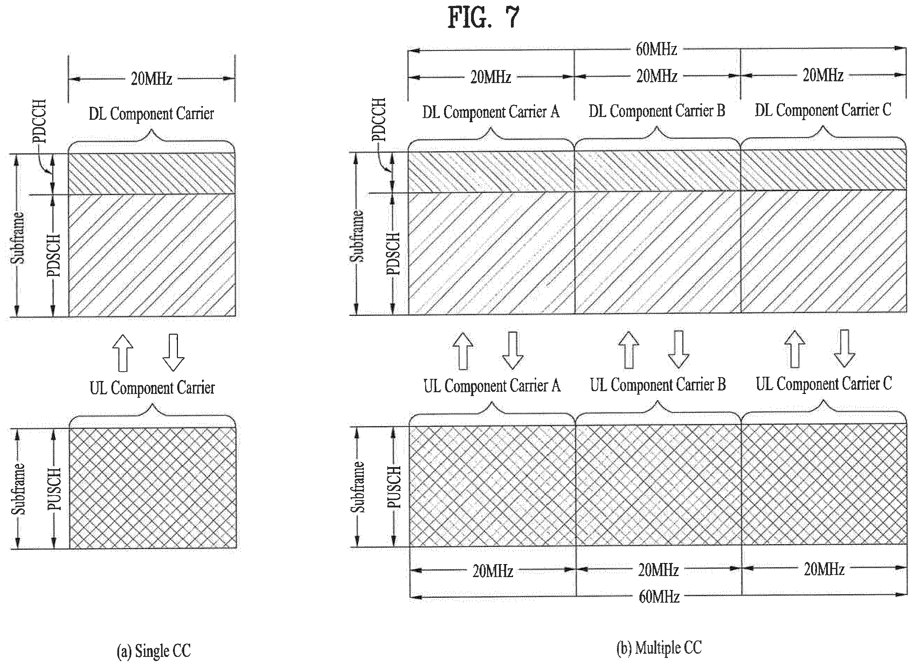

FIG. 7 is a diagram for explaining single-carrier communication and multi-carrier communication. Specially, FIG. 7(a) illustrates a subframe structure of a single carrier and FIG. 7(b) illustrates a subframe structure of multiple carriers.

Referring to FIG. 7(a), a general wireless communication system transmits/receives data through one downlink (DL) band and through one uplink (UL) band corresponding to the DL band (in the case of frequency division duplex (FDD) mode), or divides a prescribed radio frame into a UL time unit and a DL time unit in the time domain and transmits/receives data through the UL/DL time unit (in the case of time division duplex (TDD) mode). Recently, to use a wider frequency band in recent wireless communication systems, introduction of carrier aggregation (or BW aggregation) technology that uses a wider UL/DL BW by aggregating a plurality of UL/DL frequency blocks has been discussed. A carrier aggregation (CA) is different from an orthogonal frequency division multiplexing (OFDM) system in that DL or UL communication is performed using a plurality of carrier frequencies, whereas the OFDM system carries a base frequency band divided into a plurality of orthogonal subcarriers on a single carrier frequency to perform DL or UL communication. Hereinbelow, each of carriers aggregated by carrier aggregation will be referred to as a component carrier (CC). Referring to FIG. 7(b), three 20MHz CCs in each of UL and DL are aggregated to support a BW of 60MHz. The CCs may be contiguous or non-contiguous in the frequency domain. Although FIG. 7(b) illustrates that a BW of UL CC and a BW of DL CC are the same and are symmetrical, a BW of each component carrier may be defined independently. In addition, asymmetric carrier aggregation where the number of UL CCs is different from the number of DL CCs may be configured. A DL/UL CC for a specific UE may be referred to as a serving UL/DL CC configured at the specific UE.

In the meantime, the 3GPP LTE-A system uses a concept of cell to manage radio resources. The cell is defined by combination of downlink resources and uplink resources, that is, combination of DL CC and UL CC. The cell may be configured by downlink resources only, or may be configured by downlink resources and uplink resources. If carrier aggregation is supported, linkage between a carrier frequency of the downlink resources (or DL CC) and a carrier frequency of the uplink resources (or UL CC) may be indicated by system information. For example, combination of the DL resources and the UL resources may be indicated by linkage of system information block type 2 (SIB2). In this case, the carrier frequency means a center frequency of each cell or CC. A cell operating on a primary frequency may be referred to as a primary cell (Pcell) or PCC, and a cell operating on a secondary frequency may be referred to as a secondary cell (Scell) or SCC. The carrier corresponding to the Pcell on downlink will be referred to as a downlink primary CC (DL PCC), and the carrier corresponding to the Pcell on uplink will be referred to as an uplink primary CC (UL PCC). A Scell means a cell that may be configured after completion of radio resource control (RRC) connection establishment and used to provide additional radio resources. The Scell may form a set of serving cells for the UE together with the Pcell in accordance with capabilities of the UE. The carrier corresponding to the Scell on the downlink will be referred to as downlink secondary CC (DL SCC), and the carrier corresponding to the Scell on the uplink will be referred to as uplink secondary CC (UL SCC). Although the UE is in RRC-CONNECTED state, if it is not configured by carrier aggregation or does not support carrier aggregation, a single serving cell configured by the Pcell only exists.

The eNB may activate all or some of the serving cells configured in the UE or deactivate some of the serving cells for communication with the UE. The eNB may change the activated/deactivated cell, and may change the number of cells which is/are activated or deactivated. If the eNB allocates available cells to the UE cell-specifically or UE-specifically, at least one of the allocated cells is not deactivated unless cell allocation to the UE is fully reconfigured or unless the UE performs handover. Such a cell which is not deactivated unless CC allocation to the UE is full reconfigured will be referred to as Pcell, and a cell which may be activated/deactivated freely by the eNB will be referred to as Scell. The Pcell and the Scell may be identified from each other on the basis of the control information. For example, specific control information may be set to be transmitted and received through a specific cell only. This specific cell may be referred to as the Pcell, and the other cell(s) may be referred to as Scell(s).

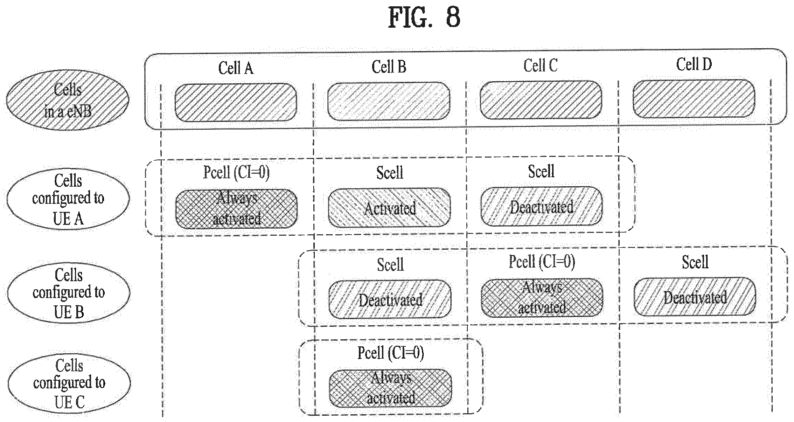

FIG. 8 illustrates the state of cells in a system supporting CA.

In FIG. 8, a configured cell refers to a cell in which CA is performed for a UE based on measurement report from another eNB or UE among cells of an eNB and is configured for each UE. The configured cell for the UE may be a serving cell in terms of the UE. The configured cell for the UE, i.e. the serving cell, prereserves resources for ACK/NACK transmission for PDSCH transmission. An activated cell refers to a cell configured to be actually used for PDSCH/PUSCH transmission among configured cells for the UE and CSI reporting and SRS transmission for PDSCH/PUSCH transmission are performed on the activated cell. A deactivated cell refers to a cell configured not to be used for PDSCH/PUSCH transmission by the command of an eNB or the operation of a timer and CSI reporting and SRS transmission are stopped on the deactivated cell. For reference, in FIG. 8, CI denotes a serving cell index and CI=0 is applied to Pcell. The serving cell index is a short ID used to identify the serving cell and, for example, any one of integers from 0 to 'maximum number of carrier frequencies which can be configured for the UE at a time minus 1' may be allocated to one serving cell as the serving cell index. That is, the serving cell index may be a logical index used to identify a specific serving cell among cells allocated to the UE rather than a physical index used to identify a specific carrier frequency among all carrier frequencies.

As described above, the term "cell" used in carrier aggregation is differentiated from the term "cell" indicating a certain geographical area where a communication service is provided by one eNB or one antenna group.

The cell mentioned in the present invention means a cell of carrier aggregation which is combination of UL CC and DL CC unless specifically noted.

Meanwhile, since one serving cell is only present in case of communication based on a single carrier, a PDCCH carrying UL/DL grant and corresponding PUSCH/PDSCH are transmitted on one cell. In other words, in case of FDD under a single carrier environment, a PDCCH for a DL grant for a PDSCH, which will be transmitted on a specific DL CC, is transmitted on the specific CC, and a PDCCH for a UL grant for a PUSCH, which will be transmitted on a specific UL CC, is transmitted on a DL CC linked to the specific UL CC. In case of TDD under a single carrier environment, a PDCCH for a DL grant for a PDSCH, which will be transmitted on a specific DL CC, is transmitted on the specific CC, and a PDCCH for a UL grant for a PUSCH, which will be transmitted on a specific UL CC, is transmitted on the specific CC.

On the contrary, since a plurality of serving cells may be configured in a multi-carrier system, transmission of UL/DL grant through a serving cell having a good channel status may be allowed. In this way, if a cell carrying UL/DL grant which is scheduling information is different from a cell where UL/DL transmission corresponding to the UL/DL grant is performed, this will be referred to as cross-carrier scheduling.

Hereinafter, the case where the cell is scheduled from itself and the case where the cell is scheduled from another cell will be referred to as self-CC scheduling and cross-CC scheduling, respectively.

For data transmission rate enhancement and stable control signaling, the 3GPP LTE/LTE-A may support aggregation of a plurality of CCs and a cross carrier-scheduling operation based on the aggregation.

If cross-carrier scheduling (or cross-CC scheduling) is applied, a PDCCH for downlink allocation for a DL CC B or DL CC C, that is, carrying a DL grant may be transmitted through a DL CC A, and a corresponding PDSCH may be transmitted through the DL CC B or DL CC C. For cross-CC scheduling, a carrier indicator field (CIF) may be introduced. The presence or absence of the CIF within the PDCCH may be semi-statically and UE-specifically (or UE-group-specifically) configured by higher layer signaling (e.g., RRC signaling). The baseline of PDCCH transmission is summarized as below.

CIF disabled: A PDCCH on a DL CC assigns PDSCH resources on the same DL CC or PUSCH resources on a single linked UL CC
No CIF
Same as an LTE PDCCH structure (same coding and same CCE-based resource mapping) and as a DCI format
CIF enabled: a PDCCH on a DL CC can assign PDSCH/PUSCH resources on a specific DL/UL CC among a plurality of aggregated DL/UL CCs using a CIF.

- Extended LTE DCI format with CIF

    - CIF (if configured) is a fixed x-bit field (e.g. x=3).
    - CIF (if configured) location is fixed regardless of DCI format size.

- Reuse of the LTE PDCCH structure (same coding and same CCE-based resource mapping)

One or more scheduling cells may be configured for one UE and one of the scheduling cells may be a PCC which is in charge of specific DL control signaling and UL PUCCH transmission. A scheduling cell set may be configured UE-specifically, UE-group-specifically, or cell-specifically. The scheduling cell may be configured so as to directly schedule at least itself. That is, the scheduling cell may become a scheduled cell thereof. In the present invention, a cell carrying a PDCCH is referred to as a scheduling cell, a monitoring cell, or an MCC and a cell carrying a PDSCH/PUSCH scheduled by the PDCCH is referred to as a scheduled cell.

The scheduling cell includes a DL CC as a part of all carrier aggregated cells. The UE detects/decodes the PDCCH only on a corresponding DL CC. In this case, a PDSCH/PUSCH of the scheduling cell or a scheduled cell refers to a PDSCH/PUSCH configured to be transmitted on the corresponding cell. A PHICH of the scheduling cell or the scheduled cell refers to a PHICH carrying ACK/NACK for a PUSCH transmitted on the corresponding cell.

With introduction of M2M technology, multi-node systems, carrier aggregation, TDD, etc., a method for effectively transmitting a large amount of ACK/NACK information at one time has been demanded. The example which does not directly fall in the scope of the claimed invention proposes a method for effectively transmitting UL ACK/NACK information. First, the terms used in association with UL ACK/NACK information transmission of the present invention are summarized below.

- HARQ-ACK (Hybrid Automatic Repeat reQuest Acknowledgement): This represents a reception response result to DL transmission (e.g. PDSCH or SPS release PDCCH), i.e. an ACK/NACK/DTX response (simply, ACK/NACK response, ACK/NACK, A/N response, or A/N). The ACK/NACK response refers to ACK, NACK, DTX, or NACK/DTX. HARQ-ACK for a CC or HARQ-ACK of a CC refers to an ACK/NACK response to DL transmission related to the CC (e.g. scheduled for the CC). A PDSCH may be replaced with a transport block or a codeword.
- PDSCH: This corresponds to a DL grant PDCCH. The PDSCH is used interchangeably with a PDSCH with a PDCCH in this specification.
- SPS release PDCCH: This refers to a PDCCH indicating SPS release. A UE feeds back ACK/NACK information about the SPS release PDCCH on UL.
- SPS PDSCH: This refers to a PDSCH transmitted on DL using resources configured semi-statically by SPS. The SPS PDSCH has no DL grant PDCCH corresponding thereto. In this specification, the SPS PDSCH is used interchangeably with a PDSCH without a PDCCH.
- PUCCH index: This corresponds to a PUCCH resource. A PUCCH index indicates, for example, a PUCCH resource index. The PUCCH resource index is mapped to at least one of an orthogonal cover (OC), a cyclic shift (CS), and a PRB.

- ARI (ACK/NACK Resource Indicator): This is used to indicate a PUCCH resource. For example, the ARI may be used to indicate a resource change value (e.g. offset) for a specific PUCCH resource (group) (configured by a higher layer). As another example, the ARI may be used to indicate a specific PUCCH resource (group) index in a PUCCH resource (group) set (configured by a higher layer). The ARI may be included in a TPC field of a PDCCH corresponding to a PDSCH on an SCC. PUCCH power control is performed through a TPC field in a PDCCH that schedules a PCC (i.e. PDCCH corresponding to a PDSCH on a PCC). The ARI may be included in a TPC field of a PDCCH other than a PDCCH that has a downlink assignment index (DAI) initial value and schedules a specific cell (e.g. PCell). The ARI is used interchangeably with a HARQ-ACK resource indication value.
- DAI (Downlink Assignment Index): This is included in DCI transmitted over a PDCCH. The DAI may indicate an order value or a counter value of a PDCCH. For convenience, a value indicated by a DAI field of a DL grant PDCCH is referred to as a DL DAI and a value indicated by a DAI field of a UL grant PDCCH is referred to as a UL DAI.
- Implicit PUCCH resource: This represents a PUCCH resource/index linked to the lowest CCE index of a PDCCH that schedules a PCC or is transmitted on the PCC.
- Explicit PUCCH resource: This may be indicated using an ARI.
- PDCCH that schedules a CC: This indicates a PDCCH that schedules a PDSCH or a PUSCH on the CC. That is, the PDCCH that schedules a CC refers to a PDCCH corresponding to a PDSCH or a PUSCH on the CC.
- PCC (Primary Component Carrier) PDCCH: This represents a PDCCH that schedules a PCC. That is, the PCC PDCCH represents a PDCCH corresponding to a PDSCH or a PUSCH on the PCC. The PCC PDCCH is transmitted only on the PCC on the assumption that cross-CC scheduling is not performed for the PCC.
- SCC (Secondary Component Carrier) PDCCH: This represents a PDCCH that schedules an SCC. That is, the SCC PDCCH represents a PDCCH corresponding to a PDSCH or a PUSCH on the SCC. When cross-CC scheduling is permitted for the SCC, the SCC PDCCH may be transmitted on a CC other than the SCC (e.g. on a PCC or another SCC). When cross-CC scheduling is not permitted for the SCC, the SCC PDCCH is transmitted only on the SCC.
- Cross-CC scheduling: This refers to an operation of transmitting a PDCCH that schedules an SCC on a CC other than the SCC (e.g. on a PCC or another SCC). When only two CCs of a PCC and an SCC are present, cross-CC scheduling refers to an operation of scheduling/transmitting all PDCCHs only on one PCC.
- Non-cross-CC scheduling: This represents an operation of scheduling/transmitting a PDCCH that schedules each CC on the CC.

As more communication devices demand larger communication capacity, efficient use of a limited frequency band in a future wireless communication system becomes increasingly important. Even in a cellular communication system such as a 3GPP LTE/LTE-A system, a method of using, for traffic offloading, an unlicensed band such as a band of 2.4GHz used by a legacy Wi-Fi system or an unlicensed band such as a band of 5GHz, which is newly in the spotlight, is under consideration.

Basically, since the unlicensed band is based on wireless transmission/reception through contention between communication nodes, it is necessary for each communication node to confirm that other communication nodes do not perform signal transmission by performing channel sensing before signal transmission. This procedure is called clear channel assessment (CCA). Even an eNB or a UE of the LTE system needs to perform CCA for signal transmission in the unlicensed band (hereinafter, referred to as an LTE-U band). While the eNB or the UE of the LTE system transmits a signal, other communication nodes such as a Wi-Fi node should not create interference by performing CCA. For example, in Wi-Fi standards (e.g. 801.11ac), a CCA threshold is specified as -62dBm with respect to a non-Wi-Fi signal and as -82dBm with respect to a Wi-Fi signal, which means that an STA or an AP does not perform signal transmission so as not to create interference when a signal other than the Wi-Fi signal is received at a power of - 62dBm or more. Characteristically, in a Wi-Fi system, the STA or the AP may perform CCA and perform signal transmission, unless signals greater than the CCA threshold are detected for $4\mu s$ or more.

Prior to description of embodiments of the present invention, an IEEE 802.11 system will be described in detail as an example of a CSMA based system to which the embodiments of the present invention are applicable. Although the IEEE 802.11 system is described as an example of the CSMA based system for convenience, the embodiments of the present invention may be applied to other CSMA based systems.

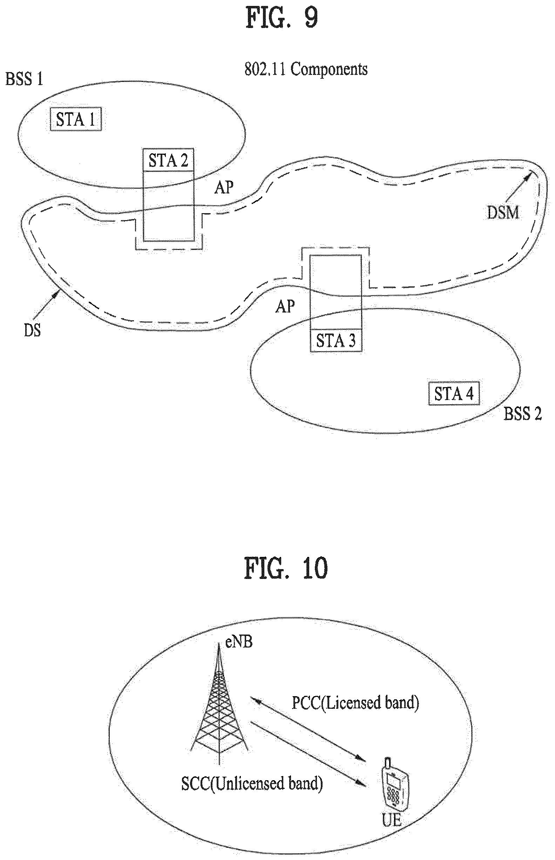

FIG. 9 is a diagram illustrating an exemplary structure of an IEEE 802.11 system to which the present invention is applicable.

The structure of the IEEE 802.11 system may be configured by a plurality of components and may provide a WLAN that supports station (STA) mobility transparent for higher layers according to interaction of the components. In a WLAN system, an STA is a device operating according to MAC/PHY specifications of IEEE 802.11. The STA includes an AP STA and a non-AP STA. The non-AP STA corresponds to a device that a user generally handles in person, such as a laptop computer or a mobile phone.

The non-AP STA may be referred to as a terminal, a wireless transmit/receive unit (WTRU), a user equipment (UE), a mobile station (MS), a mobile terminal (MT), a mobile subscriber station (MSS), etc. The AP may correspond to a base station (BS), a Node-B, an evolved Node-B (eNB), a base transceiver system (BTS), a femto BS, a pico BS, etc. in other wireless communication fields.

Referring to FIG. 9, a basic service set (BSS) may correspond to a basic component block in an IEEE 802.11 LAN. An ellipse that defines a BSS in FIG. 9 may indicate a coverage area in which STAs belonging to the corresponding BSS maintain communication. This area may be referred to as a basic service area (BSA). If an STA moves out of the BSA, the STA cannot directly communicate with other STAs in the BSA.

The most basic type of BSS in the IEEE 802.11 LAN is an independent BSS (IBSS). For example, the IBSS may have a minimum configuration including only two STAs. This configuration is possible when STAs can directly communicate with each other. This type of LAN may be configured as necessary rather than being pre-designed and configured and may be called an ad-hoc network.

When an STA is turned on or off, or enters or leaves the coverage of a BSS, membership of STAs in the BSS may be dynamically changed. To become a member of the BSS, an STA may join the BSS using a synchronization procedure. To access all services based on the BSS, an STA needs to be associated with the BSS. Such association may be dynamically configured and may use a distribution system service (DSS).

In a LAN, a direct STA-to-STA distance may be limited by physical (hereinafter, PHY) layer performance. While this distance limit may be sufficient in some cases, communication between STAs having a longer distance therebetween may be needed in other cases. To support an extended coverage, a distribution system (DS) may be configured.

The DS refers to a structure in which BSSs are connected to each other. Specifically, BSSs may be present as components of an extended form of a network composed of a plurality of BSSs rather than being independently present.

The DS is a logical concept and may be specified by characteristics of a distribution system medium (DSM). In IEEE 802.11 standards, a wireless medium (WM) and the DSM are logically discriminated. These logical media are used by different components for different purposes. In definition of IEEE 802.11 standards, the media are not limited as the same medium or different media. The fact that plural media are logically different from each other may explain flexibility of an IEEE 802.11 LAN structure (a DS structure or other network structures). That is, the IEEE 802.11 LAN structure may be implemented in various manners and may be independently specified by physical characteristics of implementations thereof.

The DS may support mobile devices by providing seamless integration of a plurality of BSSs and providing logical services necessary to handle addresses to a destination.

The AP (i.e. an AP STA) refers to an entity that enables associated STAs to access the DS through the WM and has STA functionality. Data may be transmitted between a BSS and the DS through the AP. For example, STA2 and STA3 shown in FIG. 9 have STA functionality and provide a function of enabling associated STAs (STA1 and STA4) to access the DS. In addition, all APs are addressable entities because they basically correspond to STAs. An address used by an AP for communication on the WM does not necessarily need to be equal to an address used by the AP for communication on the DSM.

Data transmitted from one of STAs associated with an AP to an STA address of the AP may be received at an uncontrolled port at all times and processed by an IEEE 802.1X port access entity. In addition, the transmitted data (or frame) may be delivered to the DS when a controlled port is authenticated.

In a WLAN system based on IEEE 802.11, a basic access mechanism of MAC is a CSMA/CA mechanism. The CSMA/CA mechanism is also called a distributed coordination function (DCF) of IEEE 802.11 MAC and basically adopts an access mechanism of "listen before talk". According to this type of access mechanism, an AP and/or an STA may perform CCA for sensing a radio channel or a medium for a predetermined time duration (e.g. DCF inter-frame space (DIFS) prior to starting transmission. If it is determined that the medium is in an idle state as a sensing result, the AP and/or the STA starts to transmit a frame through the medium. Meanwhile, if it is sensed that the medium is in an occupied state, the AP and/or the STA may attempt to transmit the frame after waiting a delay duration for medium access (e.g. a random backoff period) without starting transmission thereof. Since it is expected that multiple STAs attempt to perform frame transmission after waiting different times by applying the random backoff period, collision can be minimized.

Hereinafter, there are provided examples of a HARQ operation, which do not directly fall in the scope of the claimed invention, for a carrier aggregation situation including a cell/carrier on which an available resource duration is aperiodically and/or discontinuously secured/configured as in an LTE-U system that opportunistically operates based on carrier sensing in the aforementioned unlicensed band.

FIG. 10 illustrates a carrier aggregation situation of a 3GPP LTE-A band, which is a licensed band, and an unlicensed band (hereinafter, an LTE-U band).

Referring to FIG. 10, an eNB may transmit a signal to a UE or the UE may transmit a signal to the eNB in the carrier aggregation situation of the LTE-A band and the LTE-U band. In the following description, it is assumed for convenience of description of proposed schemes that the UE is configured to perform wireless communication through two component carriers (CCs) in the LTE-A band and the LTE-U band. As an example, a CC of the LTE-A band may be configured as a PCC and a CC of the LTE-U band may be configured as an SCC. However, the embodiments of the present invention may be extensively applied to a situation in which a plurality of LTE-A bands and a plurality of LTE-U bands are used by a carrier aggregation scheme or may be applied even when signal transmission/reception between the eNB and the UE is performed only in the LTE-U band. In addition, the embodiments of the present invention may be extensively applied not only to the 3GPP LTE/LTE-A system but also to systems having other characteristics.

Hereinafter, for convenience of description, a cell that is configured in the LTE-A band for 3GPP LTE/LTE-A and operates based on a 3GPP LTE/LTE-A scheme will be referred to as an Lcell, a non-Ucell, or a normal cell.

In addition, for convenience of description, a cell that is configured in the LTE-U band and operates based on an LTE-U scheme will be referred to as a Ucell hereinbelow.

A PUCCH/PUSCH/PDCCH/PDSCH transmitted in a specific cell or allocated in the specific cell is referred to as a specific cell PUCCH/PUSCH/PDCCH/PDSCH. For example, a PUSCH that is transmitted on a Ucell or scheduled to be transmitted on the Ucell is referred to as a Ucell PUSCH. A PUSCH that is transmitted on the normal cell or scheduled, i.e. allocated, to be transmitted on the normal cell is referred to as a normal cell PUSCH.

In order for an eNB and a UE to perform communication in the LTE-U band which is an unlicensed spectrum, the eNB and the UE should occupy/secure the corresponding band for a specific time duration through contention with other communication (e.g. Wi-Fi) systems which are not associated with the LTE/LTE-A system. Hereinafter, the time duration occupied/secured for communication in the LTE-U band will be referred to as a reserved resource period (RRP), for convenience. To secure the RRP, various methods may be used. Typically, there may be a method of transmitting a specific reservation signal so that other communication system devices such as a Wi-Fi device may recognize that a corresponding radio channel is busy, or continuously transmitting an RS and a data signal so that a signal of a specific power level or more may be seamlessly transmitted during the RRP.

The RRP may be configured based on carrier sensing performed by the eNB. If the eNB has determined the RRP during which the eNB desires to occupy the LTE-U band in advance, the eNB may pre-inform the UE of the RRP so that the UE may maintain a communication transmission/reception link during the indicated RRP. As a scheme of informing the UE of information about the RRP, the eNB may transmit the information about the RRP through another CC (e.g. the LTE-A band) connected in the form of carrier aggregation.

An entity for determining the RRP may differ according to whether transmission is performed on DL or UL. For example, the RRP for DL transmission (hereinafter, a DL RRP) may be determined by the eNB based on carrier sensing performed by the eNB. The RRP for UL transmission (a UL RRP) may be determined by the eNB based on carrier sensing performed by the eNB and then indicated to the UE. Alternatively, the UE may confirm or determine the UL RRP in units of subframes by confirming a channel state, i.e. through carrier sensing performed by the UE, prior to signal transmission.

On a cell used for legacy carrier aggregation, i.e. on an Lcell, an RS for channel synchronization or an RS for channel measurement, such as a PSS/SSS/PBCH, a CRS, and/or a CSI-RS, appears periodically and continuously. In contrast, on a Ucell, the eNB may configure the RRP only when the Ucell is in an idle state, and transmit the RS for channel measurement in the RRP. Therefore, the synchronization/measurement RSs will appear aperiodically and/or discontinuously on the Ucell.

Meanwhile, on the Lcell, although the UE is configured to detect the RS(s) or perform synchronization or measurement using the RS(s) for a time duration while the Lcell is activated, the RS(s) may be transmitted for a time duration while the Lcell is inactivated. The synchronization/measurement RS(s) are continuously transmitted regardless of activation or inactivation of the Lcell but the UE is configured to detect the synchronization/measurement RSs only for a time duration during which the Lcell is activated. Unlike this, on the Ucell, the eNB transmits the synchronization or measurement RS(s) only during the RRP and, in principle, does not transmit synchronization or measurement RS(s) during a non-RRP because a wireless communication medium is occupied by other devices during the non-RRP.

As another example of an operation in the LTE-U band which operates by a contention-based random access scheme, the eNB may first perform carrier sensing (CS) before transmitting/receiving data. The eNB may check whether a current channel state of an SCell is busy or idle. If it is determined that the current channel state is idle, the eNB may transmit a scheduling grant through a PDCCH of a PCell (i.e. through cross carrier scheduling (CCS)) or through a PDCCH of the SCell and attempt to transmit/receive data. In this case, for example, the eNB may configure an RRP including M consecutive subframes (SFs). Here, the eNB may pre-inform the UE of the M value and usage of the M SFs through higher layer signaling (using the PCell) or through a physical control/data channel. A start timing of the RRP may be periodically or semi-statically configured through higher layer signaling. If the start timing of the RRP should be set to SF #n, the start timing of the RRP may be designated through physical layer signaling in SF #n or SF #(n-k).

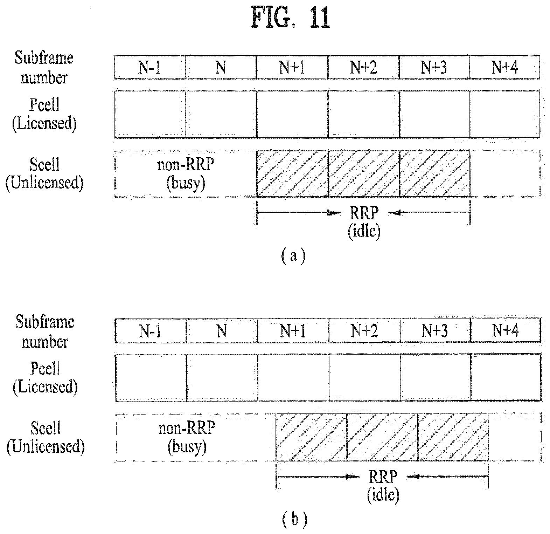

FIG. 11 illustrates a subframe configuration of an RRP.

The RRP may be configured such that boundaries of subframe(s) constituting the RRP are aligned with boundaries of subframe(s) configured on a Pcell, as illustrated in FIG. 11(a), or such that the boundaries of the subframe(s) constituting the RRP are misaligned with the boundaries of the subframe(s) configured on the Pcell, as illustrated in FIG. 11(b).

As illustrated in FIG. 11(a), the RRP configured such that subframe boundaries and subframe numbers/indexes on a Ucell are aligned with those on the Pcell is referred to as an aligned-RRP and, as illustrated in FIG. 11(b), the RRP configured such that subframe boundaries and subframe numbers/indexes on the Ucell are misaligned with those on the Pcell is referred to as a floating-RRP. In the embodiments of the present invention, the meaning of aligning subframe boundaries between cells with each other is that an interval between subframe boundaries of two different cells is less than a specific time (e.g. CP length or X $\mu$s where X $\geq$ 0).

The present invention proposes a control and handling method for PUSCH transmission in a carrier aggregation situation including a cell/carrier on which an available resource duration is aperiodically or discontinuously secured/configured as in an LTE-U system that opportunistically operates based on carrier sensing in the aforementioned LTE-U band.

For convenience of description, a carrier aggregation situation is considered in which an Lcell operating based on a legacy LTE scheme is configured as a Pcell and a Ucell operating based on the above-described LTE-U scheme is aggregated with the Lcell as an Scell.

In consideration of a carrier aggregation situation including a PUSCH scheduled/transmitted through an RRP on the Ucell, the following embodiments of UL transmission power control and UCI piggyback are proposed.

(a) UL power control method in a situation including Ucell PUSCH transmission

As opposed to a normal cell configured in a legacy licensed band, a Ucell opportunistically configured in an unlicensed band may be problematic in that interference is received from other systems due to sensing inaccuracy caused by a hidden node problem (HNP) even in an RRP which is secured through a contention process such as carrier sensing. For example, data transmission/reception through the Ucell may be (relatively) somewhat unstable due to interference from other systems such as a Wi-Fi system that attempts to perform a signal transmission operation in the unlicensed band.

In consideration of the above problem, the present invention proposes a cell/channel/UCI protection priority for determining a cell/channel/UCI to reduce power or drop transmission in a maximum power restriction situation. For one UE, a total maximum power of the UE (hereinafter, $P_{ue-max}$), a maximum power of a cell group (hereinafter, $P_{cg-max}$), and a maximum power of a cell (hereinafter, $P_{c-max}$) may be configured. The maximum power restriction situation may be generated when the transmission power of the corresponding cell(s)/channel(s)/UCI exceeds any one of the UE total maximum power $P_{ue-max}$, the cell group maximum power $P_{cg-max}$, the cell maximum power $P_{c-max}$. The UE may perform a UL power control process in a manner of preferentially reducing the power of a cell/channel/UCI having a lower protection priority or dropping transmission of the same. Various methods may be used to reduce the transmission power of the channel/UCI having a lower protection priority. For example, assuming that a transmission power necessary to transmit a channel/UCI having a high protection priority is $P_A$ and a transmission power necessary to transmit a channel/UCI having low protection priority is $P_B$, if a situation in which $P_A + P_B > P_{max,UE}$ occurs, a cell/channel/UCI may be selected according to a protection priority of the present invention. Power in the same cell may be allocated in order of PRACH > PUCCH > PUSCH with UCI > PUSCH without UCI > SRS and, for details thereof, refer to "5.1 Uplink power control" of 3GPP TS 36.213 Rel-11.

Specifically, when a UL transmission power at a timing at which PUSCH transmission on a Ucell collides with PUSCH transmission on a normal cell (other than the Ucell) exceeds a maximum restriction power of the UE (e.g. P_max), it is proposed that a PUSCH transmission power on the Ucell (rather than the normal cell) be preferentially reduced in order to protect PUSCH transmission on the normal cell. In other words, if a transmission power needed to transmit a PUSCH on the normal cell is a normal cell PUSCH transmission power, the normal cell PUSCH transmission power is preferentially allocated within the range of P_max. (Unless other cells having a high priority are present,) if the normal cell PUSCH transmission power does not exceed P_max, the normal cell PUSCH transmission power is allocated to a normal cell PUSCH and, if the normal cell PUSCH transmission power exceeds P_max, P_max (or the remainder obtained by subtracting a transmission power allocated to other channels having a high priority from P_max when there are other channels having a high priority) may be allocated to the normal cell PUSCH. (If there are no other channels to be transmitted together with a Ucell PUSCH and the normal cell PUSCH,) min(P_max - normal cell PUSCH transmission power, Ucell PUSCH transmission power) may be allocated to the Ucell PUSCH. Alternatively, if a UL transmission power at a timing at which PUSCH transmission on the Ucell collides with PUSCH transmission on the normal cell (other than the Ucell) exceeds the maximum restriction power of the UE (e.g. P_max), an embodiment of omitting/dropping PUSCH transmission on the Ucell is proposed to protect PUSCH transmission on the normal cell.

Alternatively, as opposed to the above embodiments, if UL transmission power at a timing at which PUSCH transmission on the Ucell collides with PUSCH transmission on the normal cell (other than the Ucell) exceeds the maximum restriction power of the UE (e.g. P_max), an embodiment of preferentially reducing a PUSCH transmission power on the normal cell (rather than on the Ucell) or an embodiment of omitting/dropping PUSCH transmission on the normal cell may be considered in order to protect PUSCH transmission on the Ucell in which an available resource, i.e. an RRP, is intermittently/opportunistically secured. In this case, a PUSCH on the normal cell may be limited only to a PUSCH that does not include UCI (e.g. HARQ-ACK or CSI) transmission.

In the embodiments of the present invention, the meaning of omitting/dropping PUSCH (or another UL channel/signal) transmission may indicate an operation of dropping corresponding PUSCH transmission or pending corresponding PUSCH transmission (for a predetermined time).

Meanwhile, a Ucell PUSCH including UCI (e.g. aperiodic CSI) may have a higher protection priority than a non-Ucell PUSCH which does not include the UCI. For example, if the Ucell PUSCH including the UCI, i.e. carrying the UCI, has a higher protection priority than the non-Ucell PUSCH which does not include the UCI, the power of the non-Ucell PUSCH may be preferentially reduced relative to the power of the Ucell PUSCH or transmission of the non-Ucell PUSCH may be omitted/dropped. Alternatively, the Ucell PUSCH carrying the UCI and the non-Ucell PUSCH which does not include the UCI may have the same protection priority. If the Ucell PUSCH carrying the UCI and the non-Ucell PUSCH which does not include the UCI have the same protection priority, the powers of the two PUSCHs may be reduced at the same ratio. For example, the protection priority between PUSCH transmissions may be considered in order of non-Ucell PUSCH with HARQ-ACK > non-Ucell PUSCH with CSI> Ucell PUSCH with CSI $\geq$ non-Ucell PUSCH without UCI > Ucell PUSCH without UCI.

Meanwhile, a power headroom report (PHR) is used to provide, to a serving eNB, information about a difference between a normal UE maximum transmission power per activated serving cell and an estimated power for UL-SCH transmission and information about a difference between the normal UE maximum transmission power and an estimated power for UL-SCH transmission and PUCCH transmission on a Pcell. For a PHR for UL (e.g. PUSCH) transmission on a Ucell, PHR transmission may be performed only with respect to a Ucell in which an RRP (including a UL SF) is configured in an activation state. In other words, PHR transmission may be omitted with respect to a Ucell on which the RRP (including the UL SF) is not configured (in an inactivation state or) even in an activation state.

(b) UCI piggybacking method in a situation including Ucell PUSCH transmission

Based on a similar reason to UL power control described above, an embodiment is proposed for assigning a lower priority to a PUSCH via which UCI is to be transmitted (e.g. piggybacked), i.e. a Ucell, in priority for selecting a cell, in order to guarantee stable UCI transmission performance, when UCI transmission is demanded at a timing at which PUSCH transmission on the Ucell collides with PUSCH transmission on a normal cell (e.g. a non-Ucell) (other than the Ucell). An embodiment of preferentially selecting the normal cell is proposed when UCI to be transmitted is present at a timing at which Ucell PUSCH transmission and normal cell PUSCH transmission collide, in other words, when Ucell PUSCH transmission and normal cell PUSCH transmission are scheduled to be transmitted in the same subframe and the UCI to be transmitted in the above subframe is present.

As another embodiment, the UCI may be restricted not to be transmitted through a PUSCH on the Ucell. That is, the UCI may not be piggybacked on the Ucell PUSCH by excluding the Ucell PUSCH from a UCI transmission object. In this case, the UCI may be limited only to the case including HARQ-ACK. If UCI (e.g. HARQ-ACK or periodic CSI) transmission is requested at the same timing as a Ucell PUSCH transmission timing in a state in which there is only PUSCH transmission on the Ucell and there is no PUSCH transmission on other normal cells (for a UE that is not permitted to perform simultaneous transmission of a PUCCH and a PUSCH), a method may be considered in which the UE

 1) omits/drops Ucell PUSCH transmission and transmits the UCI using a Pcell PUCCH,
 2) as opposed to 1), omits/drops UCI transmission and transmits only a Ucell PUSCH, or
 3) transmits the UCI through piggybacking on the Ucell PUSCH.

In this case, the UCI may be limited only to the case including HARQ-ACK in 1) or the case including only periodic CSI in 2) and 3). In addition, if simultaneous transmission of HARQ-ACK and (periodic) CSI is requested at the same timing as the Ucell PUSCH transmission timing in a state in which there is only PUSCH transmission on the Ucell and there is no PUSCH transmission on other normal cells (for a UE that is permitted to perform simultaneous transmission of the PUCCH and the PUSCH), the UE may transmit the HARQ-ACK and the CSI using the Pcell PUCCH and omit/drop Ucell PUSCH transmission, or transmit the Ucell PUSCH without piggybacking the UCI on the Ucell PUSCH.

Meanwhile, when considering a situation in which periodic CSI is transmitted through piggybacking on a specific Ucell PUSCH, if an eNB fails to detect the specific Ucell PUSCH, the eNB is not aware of whether the detection failure reason is

 1) because a UE has missed a corresponding UL grant, or
 2) because the UE has correctly received the UL grant but has failed to perform CCA through Ucell carrier sensing.

For this reason, there may be inequality between the UE and the eNB with respect to whether rate-matching is applied (according to CSI piggybacking) on another (Ucell) PUSCH. To solve such a problem, it may be considered to always attach a CRC code to periodic CSI piggybacked on a Ucell PUSCH (or piggybacked on an arbitrary PUSCH in a carrier aggregation situation including a Ucell) (regardless of the size of the periodic CSI). Thus, the eNB may determine whether rate-matching is applied to the Ucell PUSCH based on the CRC code. Alternatively, the CRC code may be attached only to CSI having a specific size (e.g. 11 bits) or more as in a conventional scheme and the periodic CSI piggybacked on the Ucell PUSCH (or piggybacked on an arbitrary PUSCH in a carrier aggregation situation including the Ucell) may be limited only to the case in which the CRC code is attached. If transmission of periodic CSI to which the CRC code is not attached and transmission of the (Ucell) PUSCH collide at the same timing, the UE may operate to transmit the periodic CSI to a PUCCH and drop transmission of the (Ucell) PUSCH or to transmit the Ucell PUSCH (without CSI piggybacking) and drop transmission of the periodic CSI.

Meanwhile, in consideration of feedback of the periodic CSI for the Ucell, there may be a situation in which a CSI measurement object timing is not included in a DL RRP in the Ucell (i.e., the DL RRP is not configured/set in the corresponding timing) in terms of the UE. This case may correspond to the case in which the UE cannot recognize/detect the presence of the DL RRP due to a specific interference source (e.g. a Wi-Fi system) although the eNB has configured/set the DL RRP at the corresponding timing by performing CCA for the Ucell. For this reason, there may be inequality between the UE and the eNB with respect to whether rate-matching is applied (according to CSI piggybacking) in a specific PUSCH, similarly to the above case.

To solve the above problem, it is considered to always attach the CRC code to the periodic CSI for the Ucell piggybacked on an arbitrary PUSCH (regardless of the size of the CSI). Thus, the eNB may determine whether rate matching is applied to the PUSCH based on the CRC code. Alternatively, the CRC code may be attached only to CSI having a specific size (e.g. 11 bits) or more as in a conventional scheme and the periodic CSI for the Ucell piggybacked on the PUSCH may be limited only to the case in which the CRC code is attached. If transmission of periodic CSI for the Ucell to which the CRC code is not attached and transmission of an arbitrary PUSCH collide at the same timing, the UE may operate to transmit the periodic CSI to the PUCCH and drop transmission of the PUSCH or to transmit the PUSCH (without CSI piggybacking) and drop transmission of the periodic CSI for the Ucell.

Meanwhile, a scheme may be considered in which aperiodic CSI (and/or periodic CSI) transmission for a non-Ucell and a Ucell, i.e. CSI piggybacking for the non-Ucell and the Ucell, is permitted through a non-Ucell PUSCH whereas aperiodic CSI (and/or periodic CSI) transmission only for the Ucell is permitted through the Ucell PUSCH. To this end, aperiodic CSI only for (one or plural) Ucells may be configured to be requested through a UL grant for scheduling the Ucell PUSCH. In other words, a CSI reporting object DL cell set per bit state of a CSI request field may be configured/set only by the Ucell.

Alternatively, a UE for which carrier aggregation for the Ucell can be configured may be implemented/configured to perform at least PUCCH/PUSCH simultaneous transmission (between the Ucell and the non-Ucell (e.g. Pcell)). That is, carrier aggregation for the Ucell may be permitted only when the UE can perform at least PUCCH/PUSCH simultaneous transmission (simultaneous transmission of a Ucell PUCCH and a non-Ucell PUSCH or simultaneous transmission of a Ucell PUSCH and a non-Ucell PUCCH). In this case, the UE having Ucell carrier aggregation capability may be implemented/configured to basically have PUCCH/PUSCH simultaneous transmission capability.

(c) UL data transmission method in a carrier aggregation situation including a Ucell

As opposed to on a normal cell in a legacy licensed band, on a Ucell opportunistically configured in an unlicensed band, UL data transmission capability may also be unstable due to a problem such as interference from other systems as described above.

In consideration of such a situation, if a PUSCH in a Ucell and a PUSCH in a non-Ucell are scheduled to be simultaneously transmitted at the same timing, an embodiment is proposed of transmitting a specific UL data type (having relatively high importance) only through the PUSCH on the non-Ucell (or by preferentially selecting the PUSCH on the non-Ucell). The specific UL data type may include at least one of a response message to RRC configuration from the eNB, a response message to a MAC command from the eNB, various report(s) using a MAC signal (based on an event-trigger and period scheme) or a report related to RRM. The various reporting using the MAC signal may include, for example, the above-described PHR and/or buffer status reporting used to provide information about the amount/size of data usable for transmission in UL buffers of the UE to a serving eNB.

For reference, RRM is intended to provide a mechanism for causing a UE and a network to seamlessly manage mobility even without serious user intervention by providing a mobility experience to the UE, guaranteeing efficient use of available radio resources, and causing the eNB to satisfy predefined radio resource related requirements. Main procedures performed by the UE to provide support for seamless mobility include cell search, measurement, handover, and cell reselection. The eNB may provide measurement configuration applicable to the UE for RRM. For example, the eNB may transmit a measurement configuration including a measurement object, a reporting configuration, a measurement identity, a quantity configuration, and a measurement gap to the UE for RRM so that the UE may trigger measurement. The measurement object refers to an object that the UE should measure. For example, the measurement object may be a single E-UTRA carrier frequency for intra-frequency and inter-frequency measurement, a single UTRA frequency for inter-radio access technology (RAT) UTRA measurement, a set of GERAN carrier frequencies for inter-RAT GERAN measurement, and a set of cells in a single carrier frequency for inter-RAT CDMA2000 measurement. Intra-frequency measurement refers to measurement in DL carrier frequency (frequencies) of serving cell(s) and inter-frequency measurement refers to measurement in an arbitrary DL carrier frequency among DL carrier frequencies of the serving cell(s) and in other frequencies. The Reporting configuration refers to a list of reporting configurations, each including a reporting criterion indicating a criterion for triggering transmission of measurement reporting by the UE and a reporting format indicating quantities and related information that the UE should include for measurement reporting. The measurement identity represents a list of measurement identities, each linking one measurement object with one reporting configuration. By configuring a plurality of measurement identities, one or more reporting configurations may be linked to the same measurement target and one or more measurement targets may be linked to the same reporting configuration. The measurement identity is used as a reference number in measurement reporting. The quantity configuration defines measurement quantities and related filtering, used for evaluation of all events and related reporting of a corresponding measurement type. One filter may be configured per measurement quantity. The measurement gap represents a period during which the UE performs measurement because no UL/DL transmission is scheduled during the measurement gap. Upon receiving the measurement configuration, the UE performs reference signal received power (RSRP) measurement and reference signal received quality (RSRQ) measurement using a CRS in a carrier frequency indicated as a measurement object.

RSRP measurement provides a cell-specific signal strength metric. RSRP measurement is mainly used to determine priority of candidate cells (or candidate CCs) according to signal strength or is used as input for determining handover and cell reselection. RSRP is defined with respect to a specific cell (or specific CC) as a linear average of power distribution of REs carrying a CRS in a considered frequency bandwidth. The specific cell is also called a reference cell.

RSRQ serves to provide a cell-specific signal quality metric. Similarly to RSRP, RSRQ is mainly used to determine priority of candidate cells (or candidate CCs) according to signal quality. RSRQ may be used as input for handover and cell reselection, for example, when RSRP measurement does not provide information sufficient to determine reliable mobility. RSRQ is defined as "$N*$RSRP/RSSI" where $N$ is the number of RBs of an RSSI measurement bandwidth. A received signal strength indicator (RSSI) is defined as a variety of types of power including a total received wideband power observed by the UE from all sources including co-channel serving and non-serving cells, adjacent channel interference, and thermal noise, in a measurement bandwidth. Therefore, RSRQ may indicate the ratio of a pure RS power to a total power received by the UE.

Meanwhile, a UL transmission timing related to UL transmission on a Ucell is problematic. If a plurality of cells is configured for the UE, an LTE-A system commonly applies a timing advance (TA) value applicable to one specific cell (e.g. PCC or Pcell) to the plural cells. However, a Ucell and a non-Ucell that belong to different frequency bands (i.e. that are greatly separated from each other in frequency) may be carrier-aggregated or propagation characteristics of the carrier aggregated Ucell and non-Ucell may be different. In the case of a specific cell, devices such as an RRH may be arranged within a cell in order to expand coverage or eliminate a coverage hole. In this case, when UL transmission is performed using a scheme of commonly applying one TA value to a plurality of carrier aggregated cells, this may seriously affect synchronization of UL signals transmitted on the plural cells.

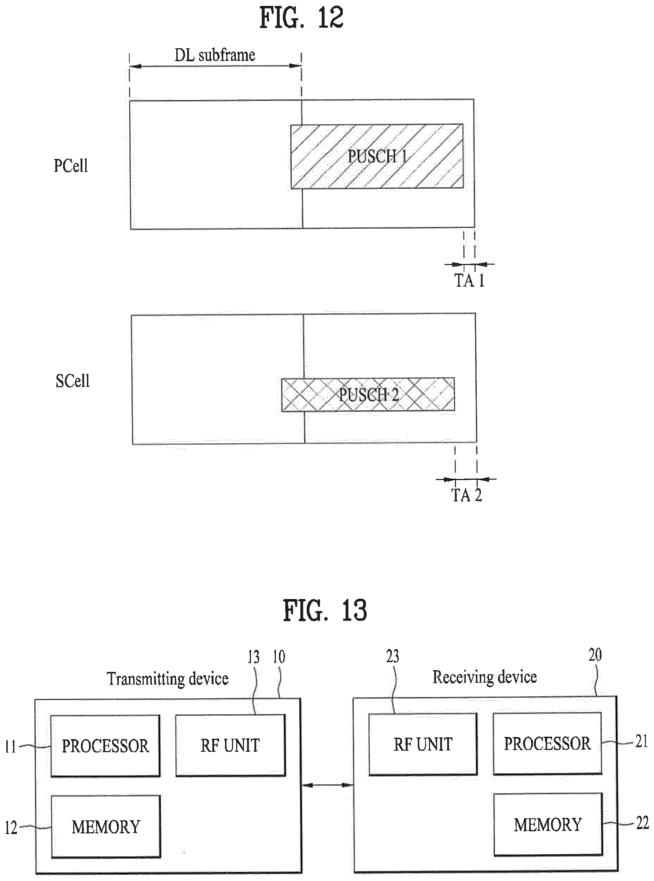

FIG. 12 illustrates a situation in which two cells (e.g. a PCell and an SCell) are configured for a UE and the UE transmits UL signals by applying different TAs to the respective cells. As illustrated, TA 1 may be applied to UL transmission of the PCell and TA 2 may be applied to UL transmission of the SCell. In FIG. 12, a transmission end timing of a UL subframe/signal (e.g. PUSCH, a PUCCH, and SRS, etc.) is advanced based on a reception end timing of a DL subframe by a TA. Equivalently, a transmission start timing of the UL subframe/signal (e.g. PUSCH, PUCCH, SRS, etc.) may be advanced based on a reception start timing of the DL subframe by a TA.

Accordingly, independent allocation of the TA on a per cell group basis and/or in units of cell groups may be considered. Hereinafter, a group of cells that are configured by a higher layer (e.g. RRC) and use the same timing reference cell and the same TA value with respect to UL-configured cells is referred to as a TA group (TAG). The TAG may include one or more cells (CCs). One TA may be commonly applied to cell(s) in the TAG. The TAG may be divided into a primary TAG (PTAG) including a Pcell and a secondary TAG (STAG) that does not include the Pcell but includes at least one serving cell having a configured UL. In the case of the PTAG to which the Pcell belongs, a TA determined based on the Pcell or adjusted through a random access procedure performed on the Pcell may be applied to all cell(s) in the PTAG. On the other hand, in the case of an STAG that does not include the Pcell, that is, consists only of Scell(s), a TA determined based on a specific Scell in the STAG may be applied to all Scell(s) in the STAG. To this end, the random access procedure may be performed through the Pcell and even through the Scell. The random access procedure performed on the Scell may be a non-contention based random access procedure triggered using a PDCCH (i.e. PDCCH order) used by the eNB to command the UE to transmit an RACH preamble rather than a contention based random access procedure triggered by the UE.

Particularly, for determination/adjustment of a UL transmission timing in a Ucell, another specific cell (e.g. a non-Ucell) rather than the corresponding Ucell may be configured as a UL timing reference cell of the Ucell. Therefore, a TA value (e.g. $N_{TA}$) configured for the Ucell (and/or a PRACH preamble transmission timing of the Ucell) may be applied (determined) based on a DL timing or UL timing of the UL timing reference cell.

In addition, a reference cell used for (DL) RSRP measurement for calculating (UL) pathloss of the Ucell may also be designated as the specific cell (e.g. a non-Ucell) rather than the Ucell.

In consideration of synchronization between a plurality of cells (including a Ucell and a normal cell (non-Ucell)) carrier-aggregated in one UE, if one TAG (to which the same TA value is applied) configured only by an Scell simultaneously includes the Ucell and the non-Ucell, which operates based on a TDD mode, a specific non-zero TA offset value (e.g. $N_{TAoffset} = 624 \cdot T_s$) may be applied to the Ucell (or UL transmission on the Ucell). If the STAG (i.e. a TAG consisting only of Scell(s)) includes only a Ucell and a non-Ucell which operates based on an FDD mode, a zero TA offset value (e.g. $N_{TAoffset} = 0 \cdot T_s$) may be applied to the Ucell (or UL transmission on the Ucell). That is, if the STAG includes only a Ucell and a non-Ucell, which operates based on an FDD mode, no TA offset may be applied. Alternatively, the non-zero TA offset value may be applied to all cells belonging to an STAG to which a Ucell including both DL resource configuration and UL resource configuration. A TA offset value may be determined/applied to an STAG to which only a Ucell including only UL resource configuration belongs according to a duplex (e.g. TDD or FDD) mode of a non-Ucell belonging to the STAG as described above.

(d) Retransmission method in other cells for PUSCH transmission on a Ucell

As described above, UL scheduling for PUSCH transmission on a Ucell may be performed within an RRP. Such an RRP on the Ucell has a high probability of being aperiodically configured/set (depending on carrier sensing etc.). Therefore, in order to reduce retransmission latency in this situation, a method of performing, on a specific non-Ucell rather than the Ucell, retransmission of (first) PUSCH transmission scheduled in the RRP on the Ucell may be considered. For convenience of description, such a specific non-Ucell that will take responsibility for retransmission of PUSCH transmission will be referred to as an Rcell. The Rcell may be designated as a cell that is configured to schedule the Ucell (when cross-CC scheduling is configured for the Ucell) or as a cell in which other specific functions are configured (e.g. a cell configured to transmit a PUCCH and/or a common search space (CSS) in a cell group to which a Pcell or the Ucell belongs) (when self-CC scheduling is configured for the Ucell). In addition, a method (of performing retransmission through the Rcell) that is the same as/similar to the above method and an Rcell configuration method may be applied even to DL retransmission of (first) PDSCH transmission scheduled in the RRP on the Ucell.

More specifically, in a state in which a PUSCH (or PDSCH) retransmission linkage is configured between the Ucell and the Rcell, an operation for performing, on the Rcell, retransmission of (first) PUSCH (or PDSCH) transmission on the Ucell may be limited to the case in which the operation is performed only when a UL grant is detected. To this end, in the case of UL retransmission, which cell of the Ucell and the Rcell UL retransmission is to be performed on may be indicated through the UL grant. In addition, in the case of DL retransmission, which cell of the Ucell and the Rcell DL retransmission is to be performed on may be indicated through the DL grant. Therefore, in this situation, if the UL grant is not detected, the UE may omit/drop UL retransmission and, in this case, HARQ-ACK feedback (i.e. PHICH) transmission (from the eNB) for PUSCH transmission (on the Ucell) may also not be performed. That is, the UE may omit an operation of receiving/detecting the PHICH for PUSCH transmission (on the Ucell).

As another method, (when an operation of transmitting/receiving the PHICH for PUSCH transmission on the Ucell is performed,) if the RRP is configured/set in the Ucell in a situation in which a PHICH for (first) transmission on the Ucell is NACK and, simultaneously, a corresponding retransmission UL grant is not detected (at a retransmission timing or in a duration corresponding to the retransmission timing), the UE may perform (non-adaptive automatic) retransmission through the Ucell. In addition, in the same situation (i.e. the PHICH is NACK and the retransmission grant is not detected), if the RRP is not configured/set in the Ucell at a retransmission object timing/duration, the UE may:

    1) omit/drop corresponding retransmission, or
    2) perform corresponding retransmission through the Rcell. In this case, parameters (e.g. an RB resource, an MCS level, DMRS information, etc.) for retransmission on the Rcell may be pre-configured.

If UL channel/signal (e.g. PRACH/PUCCH/PUSCH/SRS) transmission scheduled/configured in the Rcell is simultaneously requested at a timing at which retransmission on the Rcell for PUSCH transmission on the Ucell is performed, retransmission of the corresponding Ucell PUSCH may be omitted/dropped. As another method, only when a transmission resource of the Ucell PUSCH overlaps with that of the PUCCH/PUSCH/SRS of the Rcell at the same timing, retransmission of the Ucell PUSCH may be omitted/dropped and, when they do not overlap, retransmission of the Ucell PUSCH may be permitted. As another method, when the SRS of the Rcell overlaps a transmission timing and/or a transmission resource, 1) a retransmission signal for the Ucell PUSCH may be transmitted by applying rate-matching or puncturing (for a corresponding SRS transmission symbol) or 2) transmission of the SRS of the Rcell may be omitted/dropped and a retransmission signal for the Ucell PUSCH may be transmitted (without applying rate-matching or puncturing).

If PDSCH transmission scheduled/configured in the Rcell is simultaneously requested at a timing when retransmission on the Rcell for PDSCH transmission on the Ucell is performed, PDSCH transmission/reception on the Rcell may be omitted/dropped. As another method, only when a resource of PDSCH transmission overlaps with that of a retransmitted Ucell PDSCH at the same timing, PDSCH transmission/reception on the Rcell may be omitted/dropped and, when they do not overlap, PDSCH transmission/reception on the Rcell may be permitted.

More generally, as another method for retransmission on another cell for (DL/UL) data (first) transmitted on the Ucell, the following method may be considered. For convenience of description, (DL/UL) data (first) transmitted through the Ucell is defined as Ucell-init data and a cell configured to enable retransmission for the Ucell-init data is defined as an Rcell. A specific non-Ucell and/or another Ucell may be configured as the Rcell. Specifically, information about for which cell-init data (re)transmission is performed through (DL/UL) data transmission on the Rcell (e.g. information as to whether (DL/UL) data transmission on the Rcell is for retransmission for Ucell-init data or retransmission for Rcell-init data) may be indicated explicitly (e.g. by adding a bit of a corresponding usage to the DCI) or implicitly (according to combination of existing field values) through (DL/UL grant) DCI for scheduling the Rcell. The information indicating for which cell-init data (re)transmission is performed through (DL/UL) data transmission on the Rcell is referred to as an ReTx indicator. If the above method is applied in a situation in which CIF based cross-CC scheduling is configured, a CIF in DCI (for scheduling the Rcell) may be used to indicate a cell on which data corresponding to the DCI is to be transmitted (i.e. Rcell) and the ReTx indicator may be used to indicate whether data transmission is (re)transmission for the Ucell-init data or (re)transmission for the Rcell-init data.

Meanwhile, when retransmission for the Ucell-init data is performed through the Rcell, the number of (minimum) soft channel bits, i.e. a soft buffer size $n_{SB}$, in which the UE should store the data (received through the Rcell) is problematic.

A HARQ process is associated with a soft buffer for a transport block and a soft buffer for a code block in a PHY layer. A maximum soft buffer size of the UE is given and the soft buffer size $n_{SB}$ that each HARQ process can use in the maximum soft buffer size is determined according to the number of HARQ processes. A method of determining the soft buffer size $n_{SB}$ that each HARQ process can use will now be described in more detail.

The HARQ process is in charge of reliable transmission of a transport block. The transport block may be divided into one or more code blocks in consideration of the size of an encoder. A code block in LTE(-A) is coded by 1/3 turbo coding and the coded code block includes one system sub-block and two parity sub-blocks. Each sub-block is permutated through a $K_\Pi$-sized sub-block interleaver matrix. In a transmitter, a cyclic buffer of a length of $K_w=3K_\Pi$ for an r-th code block is generated as follows.

Equation 1

$$w_k = v_k^{(0)} \qquad \textit{for } k = 0,...,K_\Pi - 1$$

$$w_{K_\Pi+2k} = v_k^{(1)} \qquad \textit{for } k = 0,...,K_\Pi - 1$$

$$w_{K_\Pi+2k+1} = v_k^{(2)} \qquad \textit{for } k = 0,...,K_\Pi - 1$$

In this case, $N_{IR}$ bits represent a soft buffer size for a transport block and $N_{cb}$ bits represent a soft buffer size for an r-th code block. $N_{cb}$ is calculated by Equation 2 for a DL-SCH and PCH transmission channels and by Equation 3 for a UL-SCH and MCH transmission channels. In Equation 2 and Equation 3, $C$ is the number of code blocks.

Equation 2

$$N_{cb} = \min\left(\left\lfloor \frac{N_{IR}}{C} \right\rfloor, K_w\right)$$

Equation 3

$$N_{cb} = K_w$$

$N_{IR}$ is as follows.

Equation 4

$$N_{IR} = \left\lfloor \frac{N_{soft}}{K_C \cdot K_{MIMO} \cdot \min\left(M_{DL\_HARQ}, M_{limit}\right)} \right\rfloor$$

Here, $N_{soft}$ denotes a total number of soft channel bits according to UE capability. For $N_{soft}$=35982720, $K_C$=5 and for elsewhere, $N_{soft}$=3654144. If the UE supports up to two spatial layers for a DL cell, $K_C$ = 2 and, for elsewhere, $K_C$ = 1. $K_{MIMO}$ is 2 when the UE is configured to receive PDSCH transmission based on transmission mode 3, 4, 8, or 9 and $K_{MIMO}$ is 1 for the other cases. $M_{DL\_HARQ}$ demotes a maximum number of DL HARQ processes and $M_{limit}$ is 8.

In FDD and TDD, if the UE is configured to have two or more serving cells and fails to decode a code block of a transport block with respect to at least $K_{MIMO}\cdot\min(M_{DL\_HARQ}, M_{limit})$ transport blocks, the UE stores received soft channel bits corresponding to at least the following range.

Equation 5

$$w_k, w_{k+1}, \ldots, w_{\mathrm{mod}(k+n_{SB}-1, N_{cb})}$$

$n_{SB}$ is given by the following equation.

Equation 6

$$n_{SB} = \min\left( N_{cb}, \left\lfloor \frac{N'_{soft}}{C \cdot N^{DL}_{cells} \cdot K_{MIMO} \cdot \min\left(M_{DL\_HARQ}, M_{limit}\right)} \right\rfloor \right)$$

(In a DL scheduling situation,) if retransmission of Ucell-init data is performed on the Rcell, it is desirable that the number $n_{SB}$ of (minimum) soft channel bits in which the UE should store data (received through the Rcell) apply $n_{SB}$ configured in the Ucell (in which first transmission is performed) rather than in the Rcell (in consideration of a state in which data corresponding to (maximum) HARQ processes of all cells including the Ucell and the Rcell has completely filled a reception buffer). The above proposed methods including such an operation are not limited to retransmission of the Ucell-init data on the Rcell and may be applied by generalizing/replacing the Ucell and the Rcell with an arbitrary cell 1 and an arbitrary cell 2, respectively, without additional restriction on a cell type.

FIG. 13 is a block diagram illustrating elements of a transmitting device 10 and a receiving device 20 for implementing the present invention.

The transmitting device 10 and the receiving device 20 respectively include Radio Frequency (RF) units 13 and 23 capable of transmitting and receiving radio signals carrying information, data, signals, and/or messages, memories 12 and 22 for storing information related to communication in a wireless communication system, and processors 11 and 21 operationally connected to elements such as the RF units 13 and 23 and the memories 12 and 22 to control the elements and configured to control the memories 12 and 22 and/or the RF units 13 and 23 so that a corresponding device may perform at least one of the above-described embodiments of the present invention.

The memories 12 and 22 may store programs for processing and controlling the processors 11 and 21 and may temporarily store input/output information. The memories 12 and 22 may be used as buffers.

The processors 11 and 21 generally control the overall operation of various modules in the transmitting device and the receiving device. Especially, the processors 11 and 21 may perform various control functions to implement the present invention. The processors 11 and 21 may be referred to as controllers, microcontrollers, microprocessors, or microcomputers. The processors 11 and 21 may be implemented by hardware, firmware, software, or a combination thereof. In a hardware configuration, application specific integrated circuits (ASICs), digital signal processors (DSPs), digital signal processing devices (DSPDs), programmable logic devices (PLDs), or field programmable gate arrays (FPGAs) may be included in the processors 11 and 21. Meanwhile, if the present invention is implemented using firmware or software, the firmware or software may be configured to include modules, procedures, functions, etc. performing the functions or operations of the present invention. Firmware or software configured to perform the present invention may be included in the processors 11 and 21 or stored in the memories 12 and 22 so as to be driven by the processors 11 and 21.

The processor 11 of the transmitting device 10 performs predetermined coding and modulation for a signal and/or data scheduled to be transmitted to the outside by the processor 11 or a scheduler connected with the processor 11, and then transfers the coded and modulated data to the RF unit 13. For example, the processor 11 converts a data stream to be transmitted into K layers through demultiplexing, channel coding, scrambling, and modulation. The coded data stream is also referred to as a codeword and is equivalent to a transport block which is a data block provided by a MAC layer. One transport block (TB) is coded into one codeword and each codeword is transmitted to the receiving device in the form of one or more layers. For frequency up-conversion, the RF unit 13 may include an oscillator. The RF unit 13 may include $N_t$ (where $N_t$ is a positive integer) transmit antennas.

A signal processing process of the receiving device 20 is the reverse of the signal processing process of the transmitting device 10. Under control of the processor 21, the RF unit 23 of the receiving device 20 receives radio signals transmitted by the transmitting device 10. The RF unit 23 may include $N_r$ (where $N_r$ is a positive integer) receive antennas and frequency down-converts each signal received through receive antennas into a baseband signal. The processor 21 decodes and demodulates the radio signals received through the receive antennas and restores data that the transmitting device 10 intended to transmit.

The RF units 13 and 23 include one or more antennas. An antenna performs a function for transmitting signals processed by the RF units 13 and 23 to the exterior or receiving radio signals from the exterior to transfer the radio signals to the RF units 13 and 23. The antenna may also be called an antenna port. Each antenna may correspond to one physical antenna or may be configured by a combination of more than one physical antenna element. The signal transmitted from each antenna cannot be further deconstructed by the receiving device 20. An RS transmitted through a corresponding antenna defines an antenna from the view point of the receiving device 20 and enables the receiving device 20 to derive channel estimation for the antenna, irrespective of whether the channel represents a single radio channel from one physical antenna or a composite channel from a plurality of physical antenna elements including the antenna. That is, an antenna is defined such that a channel carrying a symbol of the antenna can be obtained from a channel carrying another symbol of the same antenna. An RF unit supporting a MIMO function of transmitting and receiving data using a plurality of antennas may be connected to two or more antennas.

In the embodiments of the present invention, a UE operates as the transmitting device 10 in UL and as the receiving device 20 in DL. In the embodiments of the present invention, an eNB operates as the receiving device 20 in UL and as the transmitting device 10 in DL. Hereinafter, a processor, an RF unit, and a memory included in the UE will be referred to as a UE processor, a UE RF unit, and a UE memory, respectively, and a processor, an RF unit, and a memory included in the eNB will be referred to as an eNB processor, an eNB RF unit, and an eNB memory, respectively.

The UE processor may allocate a transmission power according to any one of the embodiments of the present invention. For example, the UE processor may be configured to determine a transmission power PPUSCH_cell1 for a PUSCH allocated to a subframe n on a first cell (hereinafter, a first cell PUSCH) configured in a licensed band and a transmission power PPUSCH_cell2 for a PUSCH allocated to the subframe n on a second cell (hereinafter, a second cell PUSCH) configured in an unlicensed band. The UE processor may allocate a transmission power to the first cell PUSCH within the range of not exceeding a maximum power P_max configured for the UE. To this end, the UE processor may allocate a smaller value of P_max and PPUSCH_cell1 to the first cell PUSCH. The UE processor may allocate a transmission power to the second cell PUSCH within the range of not exceeding 'P_max - PPUSCH_cell1'. To this end, the UE processor may allocate a smaller value of 'P_max - PPUSCH_cell1' and PPUSCH_cell2 to the second cell PUSCH. The UE processor may control the UE RF unit to simultaneously (i.e. in the subframe n) transmit the first cell PUSCH and the second cell PUSCH at the allocated transmission power.

If PUSCH_cell2>'P_max - PPUSCH_cell1', the UE processor may control the RF unit to transmit the second cell PUSCH on the second cell in the subframe n at 'P_max - PPUSCH_cell1'. Alternatively, if PUSCH_cell2>'P_max - PPUSCH_cell1', the UE processor may omit or drop transmission of the second cell PUSCH in the subframe n.

As described above, the detailed description of the preferred embodiments of the present invention has been given to enable those skilled in the art to implement and practice the invention. Although the invention has been described with reference to exemplary embodiments, those skilled in the art will appreciate that various modifications and variations can be made in the present invention without departing from the scope of the invention described in the appended claims. Accordingly, the invention should not be limited to the specific embodiments described herein, but should be accorded the broadest scope consistent with the principles and novel features disclosed herein.

**Industrial Applicability**

The embodiments of the present invention are applicable to a BS, a UE, or other devices in a wireless communication system.

**Claims**

1.   A method of transmitting an uplink signal by a user equipment, UE (10), the method comprising:

determining a first transmission power, PPUSCH_cell1, for a physical uplink shared channel, PUSCH, allocated to a subframe n on a first cell, a first cell PUSCH, configured in a licensed band and a second transmission power, PPUSCH-cell2, for a PUSCH allocated to the subframe n on a second cell, a second cell PUSCH, configured in an unlicensed band, wherein, when a sum of PPUSCH_cell1 and PPUSCH_cell2 exceeds a maximum power, P_max, configured for the UE (10), and the first cell PUSCH does not contain uplink control information, UCI, reducing the determined PPUSCH_cell1; and
transmitting the first cell PUSCH on the first cell in the subframe n at the reduced PPUSCH_cell1 or dropping a transmission of the first cell PUSCH in the subframe n.

2.   The method according to claim 1, further comprising:
if the second cell PUSCH carries periodic channel state information, CSI, attaching a cyclic redundancy check, CRC, to the periodic CSI and transmitting the CRC-attached periodic CSI in the subframe n through the second cell PUSCH.

3.   The method according to claim 1,
wherein, when the first cell PUSCH is transmitted on the first cell in the subframe n at the reduced PPUSCH_cell1, uplink data including at least a response message to radio resource control, RRC, configuration, a response message to a medium access control, MAC, command, a report using a MAC signal, or a report related to radio resource management, RRM, is transmitted through the first cell PUSCH rather than the second cell PUSCH in the subframe n.

4.   The method according to claim 1, further comprising,
if a timing advance group, TAG, to which the second cell belongs includes a third cell configured in the licensed band or other licensed bands and the third cell is configured by time division duplex, TDD, transmitting the second cell PUSCH on the second cell using a specific non-zero timing advance offset value, and
if the TAG to which the second cell belongs includes the third cell and the third cell is configured by frequency division duplex, FDD, transmitting the second cell PUSCH on the second cell using a zero timing advance offset value.

5.   A user equipment, UE (10), for transmitting an uplink signal, the UE (10) comprising:

a radio frequency, RF, unit (13) configured to transmit or receive a signal, and
a processor (11) configured to control the RF unit (13), the processor (11) configured to:

determine a first transmission power, PPUSCH_cell1, for a physical uplink shared channel, PUSCH, allocated to a subframe n on a first cell, a first cell PUSCH, configured in a licensed band and a second transmission power, PPUSCH_cell2, for a PUSCH allocated to the subframe n on a second cell, a second cell PUSCH, configured in an unlicensed band, wherein, the processor (11) is further configured to:

when a sum of PPUSCH_cell1 and PPUSCH_cell2 exceeds a maximum power, P_max, configured for the UE (10), and the first cell PUSCH does not contain uplink control information, UCI, reduce the determined PPUSCH_cell1, and
control the RF unit to transmit the first cell PUSCH on the first cell in the subframe n at the reduced PPUSCH_cell1 or drop a transmission of the first cell PUSCH in the subframe n.

6.   The UE (10) according to claim 5,
wherein, if the second cell PUSCH carries periodic channel state information, CSI, the processor is configured to attach a cyclic redundancy check, CRC, to the periodic CSI and control the RF unit to transmit the CRC-attached periodic CSI in the subframe n through the second cell PUSCH.

**7.** The UE (10) according to claim 5,
wherein, when the first cell PUSCH is transmitted on the first cell in the subframe n at the reduced PPUSCH_cell1, the processor is configured to control the RF unit to transmit uplink data including at least a response message to radio resource control, RRC, configuration, a response message to a medium access control, MAC, command, a report using a MAC signal, or a report related to radio resource management, RRM, through the first cell PUSCH rather than the second cell PUSCH in the subframe n.

**8.** The UE (10) according to claim 5,
wherein, if a timing advance group, TAG, to which the second cell belongs includes a third cell configured in the licensed band or other licensed bands and the third cell is configured by time division duplex, TDD, the processor is configured to control the RF unit to transmit the second cell PUSCH on the second cell using a specific non-zero timing advance offset value, and
wherein, if the TAG to which the second cell belongs includes the third cell and the third cell is configured by frequency division duplex, FDD, the processor is configured to control the RF unit to transmit the second cell PUSCH on the second cell using a zero timing advance offset value.

**Patentansprüche**

**1.** Verfahren zum Senden eines Aufwärtsstreckensignals durch ein Endgerät (10), wobei das Verfahren umfasst:

Ermitteln einer ersten Sendeleistung, PPUSCH_cell1, für einen physischen gemeinsam genutzten Aufwärtsstreckenkanal, PUSCH, der einem Subrahmen n in einer ersten Zelle zugewiesen ist, wobei ein erster Zellen- PUSCH in einem lizenzierten Band konfiguriert ist, und einer zweiten Sendeleistung, PPUSCH_cell2, für einen PUSCH, der einem Subrahmen n in einer zweiten Zelle zugewiesen ist, wobei ein zweiter Zellen-PUSCH in einem nicht lizenzierten Band konfiguriert ist,
wobei, wenn eine Summe von PPUSCH_cell1 und PPUSCH_cell2 eine Maximalleistung P_max überschreitet, die für das UE (10) konfiguriert ist, und der erste Zellen-PUSCH keine Aufwärtsstrecken-Steuerinformation, UCI, enthält, Reduzieren der ermittelten PPUSCH_cell1; und
Senden des ersten Zellen-PUSCH in der ersten Zelle im Subrahmen n mit der reduzierten PPUSCH_cell1 oder Fallenlassen einer Sendung des ersten Zellen-PUSCH im Subrahmen n.

**2.** Verfahren nach Anspruch 1, ferner umfassend:
falls der zweite Zellen-PUSCH eine periodische Kanalzustandsinformation, CSI, trägt, Anfügen einer zyklischen Redundanzprüfung, CRC, zur periodischen CSI und Senden der periodischen CSI mit angefügter CRC im Subrahmen n über den zweiten Zellen-PUSCH.

**3.** Verfahren nach Anspruch 1,
wobei, wenn der erste Zellen-PUSCH in der ersten Zelle im Subrahmen n mit der reduzierten PPUSCH_cell1 gesendet wird, Aufwärtsstrecken-Daten, die zumindest eine Antwortnachricht auf eine Funkressourcensteuerungskonfiguration, RRC-Konfiguration, eine Antwortnachricht auf einen Medium-Access-Control-Befehl, MAC-Befehl, einen Bericht unter Verwendung eines MAC-Signals oder einen mit Funkressourcenverwaltung, RRM, verbundenen Bericht enthalten, über den ersten Zellen-PUSCH anstatt des zweiten Zellen-PUSCH im Subrahmen n gesendet werden.

**4.** Verfahren nach Anspruch 1, ferner umfassend,
falls eine Timing-Advance-Gruppe, TAG, zu der die zweite Zelle gehört, eine dritte Zelle enthält, die im lizenzierten Band oder anderen lizenzierten Bändern konfiguriert ist und die dritte Zelle durch Zeitmultiplexen, TDD, konfiguriert ist, Senden des zweiten Zellen-PUSCH in der zweiten Zelle unter Verwendung eines bestimmten, von null verschiedenen Timing-Advance-Offsetwerts und
falls die TAG, zu der die zweite Zelle gehört, die dritte Zelle enthält und die dritte Zelle durch Frequenzmultiplexen, FDD, konfiguriert ist, Senden des zweiten Zellen-PUSCH in der zweiten Zelle unter Verwendung eines Offsetwerts mit null Timing Advance.

**5.** Endgerät, UE, (10) zum Senden eines Aufwärtsstreckensignals, wobei das UE (10) umfasst:

eine Funkfrequenzeinheit, RF-Einheit (13), die ausgelegt ist, ein Signal zu senden oder zu empfangen, und einen Prozessor (11), der ausgelegt ist, die RF-Einheit (13) zu steuern, wobei der Prozessor (11) ausgelegt ist:

eine erste Sendeleistung, PPUSCH_cell1, für einen physischen gemeinsam genutzten Aufwärtsstreckenkanal, PUSCH, der einem Subrahmen n in einer ersten Zelle zugewiesen ist, wobei ein erster Zellen-PUSCH in einem lizenzierten Band konfiguriert ist, und eine zweiten Sendeleistung, PPUSCH_cell2, für einen PUSCH, der einem Subrahmen n in einer zweiten Zelle zugewiesen ist, zu ermitteln, wobei ein zweiter Zellen-PUSCH in einem nicht lizenzierten Band konfiguriert ist, wobei der Prozessor (11) ferner ausgelegt ist:

wenn eine Summe von PPUSCH_cell1 und PPUSCH_cell2 eine Maximalleistung, P_max, überschreitet, die für das UE (10) konfiguriert ist, und der erste Zellen-PUSCH keine Aufwärtsstrecken-Steuerinformation, UCI, enthält, die ermittelte PPUSCH_cell1 zu reduzieren und die RF-Einheit zu steuern, den ersten Zellen-PUSCH in der ersten Zelle im Subrahmen n mit der reduzierten PPUSCH_cell1 zu senden oder eine Sendung des ersten Zellen-PUSCH im Subrahmen n fallen zu lassen.

**6.** UE (10) nach Anspruch 5, wobei, falls der zweite Zellen-PUSCH eine periodische Kanalzustandsinformation, CSI, trägt, der Prozessor ausgelegt ist, eine zyklische Redundanzprüfung, CRC, zur periodischen CSI anzufügen und die RF-Einheit zu steuern, die periodische CSI mit angefügter CRC im Subrahmen n über den zweiten Zellen-PUSCH zu senden.

**7.** UE (10) nach Anspruch 5, wobei, wenn der erste Zellen, PUSCH in der ersten Zelle im Subrahmen n mit der reduzierten PPUSCH_cell1 gesendet wird, der Prozessor ausgelegt ist, die RF-Einheit zu steuern, Aufwärtsstrecken-Daten, die zumindest eine Antwortnachricht auf einen Medium-Access-Control-Befehl, MAC-Befehl, einen Bericht unter Verwendung eines MAC-Signals oder einen mit Funkressourcenverwaltung, RRM, verbundenen Bericht enthalten, über den ersten Zellen-PUSCH anstatt des zweiten Zellen-PUSCH im Subrahmen n zu senden.

**8.** UE (10) nach Anspruch 5, wobei, falls eine Timing-Advance-Gruppe, TAG, zu der die zweite Zelle gehört, eine dritte Zelle enthält, die im lizenzierten Band oder anderen lizenzierten Bändern konfiguriert ist und die dritte Zelle durch Zeitmultiplexen, TDD, konfiguriert ist, der Prozessor ausgelegt ist, die RF-Einheit zu steuern, den zweiten Zellen-PUSCH in der zweiten Zelle unter Verwendung eines bestimmten, von null verschiedenen Timing-Advance-Offsetwerts zu senden und wobei, falls die TAG, zu der die zweite Zelle gehört, die dritte Zelle enthält und die dritte Zelle durch Frequenzmultiplexen, FDD, konfiguriert ist, der Prozessor ausgelegt ist, die RF-Einheit zu steuern, den zweiten Zellen-PUSCH in der zweiten Zelle unter Verwendung eines Offsetwerts mit null Timing Advance zu senden.

## Revendications

**1.** Procédé d'émission d'un signal de liaison montante par un équipement utilisateur, UE, (10), le procédé comprenant :

déterminer une première puissance d'émission, PPUSCH_cellule1, pour un canal partagé de liaison montante physique, PUSCH, alloué à une sous-trame n sur une première cellule, un PUSCH de première cellule, configurée dans une bande autorisée et une seconde puissance d'émission, PPUSCH_cellule2, pour un PUSCH alloué à la sous-trame n sur une seconde cellule, un PUSCH de seconde cellule, configurée dans une bande non autorisée, dans lequel, lorsqu'une somme des PPUSCH_cellule1 et PPUSCH_cellule2 dépasse une puissance maximale, P_max, configurée pour l'UE (10), et que le PUSCH de première cellule ne contient pas d'informations de commande de liaison montante, UCI, réduire la PPUSCH_cellule1 déterminée ; et émettre le PUSCH de première cellule sur la première cellule dans la sous-trame n à la PPUSCH_cellule1 réduite ou abandonner une émission du PUSCH de première cellule dans la sous-trame n.

**2.** Procédé selon la revendication 1, comprenant en outre : si le PUSCH de seconde cellule transporte des informations d'état de canal, CSI, périodiques, rattacher un contrôle de redondance cyclique, CRC, aux CSI périodiques et émettre les CSI périodiques à rattachement de CRC dans la sous-trame n à travers le PUSCH de seconde cellule.

**3.** Procédé selon la revendication 1,
dans lequel, lorsque le PUSCH de première cellule est émis sur la première cellule dans la sous-trame n à la PPUSCH_cellule1 réduite, des données de liaison montante comprenant au moins un message de réponse à une configuration de commande de ressource radio, RRC, un message de réponse à une instruction de commande d'accès au support, MAC, un rapport utilisant un signal MAC, ou un rapport relatif à une gestion de ressource radio, RRM, sont émises à travers le PUSCH de première cellule plutôt qu'à travers le PUSCH de seconde cellule dans la sous-trame n.

**4.** Procédé selon la revendication 1, comprenant en outre,
si un groupe d'avance temporelle, TAG, auquel la seconde cellule appartient comprend une troisième cellule configurée dans la bande autorisée ou d'autres bandes autorisées et que la troisième cellule est configurée par un duplexage par répartition dans le temps, TDD, émettre le PUSCH de seconde cellule sur la seconde cellule en utilisant une valeur de décalage d'avance temporelle non nulle spécifique, et
si le TAG auquel la seconde cellule appartient comprend la troisième cellule et que la troisième cellule est configurée par un duplexage par répartition en fréquence, FDD, émettre le PUSCH de seconde cellule sur la seconde cellule en utilisant une valeur de décalage d'avance temporelle nulle.

**5.** Equipement utilisateur, UE, (10), pour émettre un signal de liaison montante, l'UE (10) comprenant :

une unité radiofréquence, RF, (13) configurée pour émettre ou recevoir un signal, et
un processeur (11) configuré pour commander l'unité RF (13), le processeur (11) étant configuré pour :

déterminer une première puissance d'émission, PPUSCH_cellule1, pour un canal partagé de liaison montante physique, PUSCH, alloué à une sous-trame n sur une première cellule, un PUSCH de première cellule, configurée dans une bande autorisée et une seconde puissance d'émission, PPUSCH_cellule2, pour un PUSCH alloué à la sous-trame n sur une seconde cellule, un PUSCH de seconde cellule, configurée dans une bande non autorisée,
dans lequel le processeur (11) est en outre configuré pour :

lorsqu'une somme des PPUSCH_cellule1 et PPUSCH_cellule2 dépasse une puissance maximale, P_max, configurée pour l'UE (10), et que le PUSCH de première cellule ne comprend pas d'informations de commande de liaison montante, UCI, réduire la PPUSCH_cellule1 déterminée, et
commander l'unité RF pour émettre le PUSCH de première cellule sur la première cellule dans la sous-trame n à la PPUSCH_cellule1 réduite ou abandonner une émission du PUSCH de première cellule dans la sous-trame n.

**6.** UE (10) selon la revendication 5,
dans lequel, si le PUSCH de seconde cellule transporte des informations d'état de canal, CSI, périodiques, le processeur est configuré pour rattacher un contrôle de redondance cyclique, CRC, aux CSI périodiques et commander l'unité RF pour émettre les CSI périodiques à rattachement de CRC dans la sous-trame n à travers le PUSCH de seconde cellule.

**7.** UE (10) selon la revendication 5,
dans lequel, lorsque le PUSCH de première cellule est émis sur la première cellule dans la sous-trame n à la PPUSCH_cellule1 réduite, le processeur est configuré pour commander l'unité RF pour émettre des données de liaison montante comprenant au moins un message de réponse à une configuration de commande de ressource radio, RRC, un message de réponse à une instruction de commande d'accès au support, MAC, un rapport utilisant un signal MAC, ou un rapport relatif à une gestion de ressource radio, RRM, à travers le PUSCH de première cellule plutôt qu'à travers le PUSCH de seconde cellule dans la sous-trame n.

**8.** UE (10) selon la revendication 5,
dans lequel, si un groupe d'avance temporelle, TAG, auquel la seconde cellule appartient comprend une troisième cellule configurée dans la bande autorisée ou d'autres bandes autorisées et que la troisième cellule est configurée par un duplexage par répartition dans le temps, TDD, le processeur est configuré pour commander l'unité RF pour émettre le PUSCH de seconde cellule sur la seconde cellule en utilisant une valeur de décalage d'avance temporelle non nulle spécifique, et
dans lequel, si le TAG auquel la seconde cellule appartient comprend la troisième cellule et que la troisième cellule est configurée par un duplexage par répartition en fréquence, FDD, le processeur est configuré pour commander l'unité RF pour émettre le PUSCH de cellule sur la seconde cellule en utilisant une valeur de décalage d'avance temporelle nulle.

# FIG. 1

1 radio frame, $T_f = 307200T_s = 10$ms

1 slot, $T_{slot} = 15360T_s = 0.5$ms

| #0 | #1 | #2 | #3 | $\cdots$ | #18 | #19 |

1 subframe

( a )

Radio frame, $T_f = 307200T_s = 10$ ms

Half Frame, $153600T_s = 5$ ms

Slot, $T_{slot} = 15360T_s$    $30720T_s$

| Subframe #0 | | | | Subframe #2 | Subframe #3 | Subframe #4 | Subframe #5 | | | | Subframe #7 | Subframe #8 | Subframe #9 |

Subframe, $30720T_s$

Dw PTS   GP   UpPTS          Dw PTS   GP   UpPTS

( b )

EP 3 179 644 B1

# FIG. 2

One DL/UL slot

$N_{symb}^{DL/UL}$ OFDM symbols

$k = N_{RB}^{DL/UL} N_{sc}^{RB} - 1$

Resource block
$N_{symb}^{DL/UL} N_{sc}^{RB}$ resource elements

Resource element $(k, l)$

$N_{symb}^{DL/UL} \times N_{sc}^{RB}$ subcarriers

$N_{sc}^{RB}$ subcarriers

$k = 0$

$l = 0$

$l = N_{symb}^{DL/UL} - 1$

# FIG. 3

10 ms radio frame

1 ms subframe

0 1 2 3 4 5 6 0 1 2 3 4 5 6

0.5 ms slot

PSS

SSS

PBCH

(a) Normal CP case

10 ms radio frame

1 ms subframe

0 1 2 3 4 5 0 1 2 3 4 5

0.5 ms slot

PSS

SSS

PBCH

(b) Extended CP case

EP 3 179 644 B1

# FIG. 4

Control region           Data region

Frequency

First slot         Second slot

Subframe

Time

# FIG. 5

# FIG. 6

# FIG. 7

(a) Single CC

(b) Multiple CC

EP 3 179 644 B1

# FIG. 8

# FIG. 9

802.11 Components

# FIG. 10

# FIG. 11

| Subframe number | N-1 | N | N+1 | N+2 | N+3 | N+4 |
|---|---|---|---|---|---|---|

Pcell (Licensed)

Scell (Unlicensed)

non-RRP (busy)

RRP (idle)

(a)

| Subframe number | N-1 | N | N+1 | N+2 | N+3 | N+4 |
|---|---|---|---|---|---|---|

Pcell (Licensed)

Scell (Unlicensed)

non-RRP (busy)

RRP (idle)

(b)

40

# FIG. 12

DL subframe

PCell

PUSCH 1

TA 1

SCell

PUSCH 2

TA 2

# FIG. 13

Transmitting device    13  10        23    Receiving device        20

| 11 PROCESSOR | RF UNIT |  | RF UNIT | PROCESSOR 21 |
| 12 MEMORY |  |  |  | MEMORY 22 |

**EP 3 179 644 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012250631 A1